(19) **Europäisches Patentamt**
**European Patent Office**
**Office européen des brevets**

(11) **EP 3 237 511 B1**

(12) # EUROPÄISCHE PATENTSCHRIFT

(45) Veröffentlichungstag und Bekanntmachung des Hinweises auf die Patenterteilung:
**16.08.2023   Patentblatt 2023/33**

(21) Anmeldenummer: **15828485.1**

(22) Anmeldetag: **15.12.2015**

(51) Internationale Patentklassifikation (IPC):
**C08J 9/36** *(2006.01)*   **B29C 44/56** *(2006.01)*
**C08J 9/14** *(2006.01)*   **C08J 9/12** *(2006.01)*
**C08J 9/00** *(2006.01)*   **B32B 5/18** *(2006.01)*
**B32B 5/24** *(2006.01)*   **B32B 7/08** *(2019.01)*

(52) Gemeinsame Patentklassifikation (CPC):
**B29C 44/3446; B29C 44/352; B29C 44/505;**
**B29C 44/569; B29C 48/90; B32B 5/022;**
**B32B 5/024; B32B 5/08; B32B 5/18; B32B 5/20;**
**B32B 5/245; B32B 27/065; C08J 9/0061;**
**C08J 9/122; C08J 9/127;**        (Forts.)

(86) Internationale Anmeldenummer:
**PCT/EP2015/079803**

(87) Internationale Veröffentlichungsnummer:
**WO 2016/102243 (30.06.2016 Gazette 2016/26)**

(54) **FASERVERSTÄRKUNG ANISOTROPER SCHAUMSTOFFE**

FIBRE REINFORCEMENT OF ANISOTROPIC FOAMS

RENFORCEMENT PAR FIBRES DE MOUSSES ANISOTROPES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014   EP 14199628**

(43) Veröffentlichungstag der Anmeldung:
**01.11.2017   Patentblatt 2017/44**

(73) Patentinhaber: **BASF SE**
**67056 Ludwigshafen (DE)**

(72) Erfinder:
• **RUCKDÄSCHEL, Holger**
**67487 Sankt Martin (DE)**
• **ARBTER, Rene**
**67251 Freinsheim (DE)**
• **STEIN, Robert**
**67122 Altrip (DE)**
• **LONGO-SCHEDEL, Daniela**
**53757 Sankt Augustin (DE)**
• **DIEHLMANN, Tim**
**67283 Obrigheim-Colgenstein (DE)**

• **SAMPATH, Bangaru Dharmapuri Sriramulu**
**67063 Ludwigshafen (DE)**
• **GUTMANN, Peter**
**76199 Karlsruhe (DE)**
• **TERRENOIRE, Alexandre**
**67071 Ludwigshafen (DE)**
• **HARTENSTEIN, Markus**
**76761 Rülzheim (DE)**
• **KIRGIS, Andreas**
**68199 Mannheim (DE)**
• **DAUN, Gregor**
**69151 Neckargemünd (DE)**
• **MARTIN, Marc, Claude**
**49448 Lemförde (DE)**
• **MERKEL, Peter**
**67308 Zellertal (DE)**
• **KICIAK, Thomas**
**67071 Ludwigshafen (DE)**
• **MORINO, Alessio**
**10090 Castagneto Po (IT)**

(56) Entgegenhaltungen:
**WO-A1-2006/125561       US-A- 3 030 256**
**US-A- 5 736 222       US-B1- 6 291 049**

(52) Gemeinsame Patentklassifikation (CPC): (Forts.)
**C08J 9/141; C08J 9/142; C08J 9/149; C08J 9/36;**
B29C 48/07; B29K 2105/04; B29K 2105/12;
B29L 2009/00; B29L 2031/08; B32B 2260/021;
B32B 2260/046; B32B 2262/0269; B32B 2262/065;
B32B 2262/101; B32B 2262/103; B32B 2262/105;
B32B 2262/106; B32B 2262/14; B32B 2266/0214;
B32B 2266/0228; B32B 2266/025;
B32B 2266/0264; B32B 2266/0292; B32B 2266/08;
B32B 2307/542; B32B 2307/546; B32B 2307/581;
B32B 2307/584; B32B 2307/706; B32B 2307/718;
B32B 2307/732; B32B 2603/00; B32B 2605/00;

B32B 2607/00; C08J 2201/03; C08J 2203/06;
C08J 2203/12; C08J 2203/14; C08J 2203/202;
C08J 2205/052; C08J 2207/00; C08J 2300/16;
C08J 2323/06; C08J 2323/12; C08J 2325/08;
C08J 2325/10; C08J 2325/12; C08J 2325/14;
C08J 2327/06; C08J 2333/00; C08J 2367/02;
C08J 2367/04; C08J 2369/00; C08J 2371/00;
C08J 2371/12; C08J 2377/00; C08J 2379/08;
C08J 2381/04; C08J 2381/06; C08J 2471/12

**Beschreibung**

Die vorliegende Erfindung betrifft einen Formkörper aus Extrusionsschaumstoff, wobei sich mindestens eine Faser (F) teilweise innerhalb des Formkörpers befindet, also vom Extrusionsschaumstoff umschlossen ist. Die beiden nicht vom Extrusionsschaumstoff umschlossenen Enden der jeweiligen Faser (F) ragen somit aus jeweils einer Seite des entsprechenden Formkörpers heraus. Der Extrusionsschaumstoff wird durch ein Extrusionsverfahren hergestellt, bei dem der Extrusionsschaumstoff erhalten wird durch Kalibrieren durch ein formgebendes Werkzeug.

Ein weiterer Gegenstand der vorliegenden Erfindung ist ein Paneel, das mindestens einen solchen Formkörper sowie mindestens eine weitere Schicht (S1) umfasst. Weitere Gegenstände der vorliegenden Erfindung sind Verfahren zur Herstellung der erfindungsgemäßen Formkörper aus Extrusionsschaumstoff bzw. der erfindungsgemäßen Paneele sowie deren Verwendung, beispielsweise als Rotorblatt in Windenergieanlagen.

WO 2006/125561 betrifft ein Verfahren zur Herstellung von einem verstärkten zellulären Material, wobei in einem ersten Verfahrensschritt im zellulären Material mindestens ein Loch erzeugt wird, das sich von einer ersten Oberfläche zu einer zweiten Oberfläche des zellulären Materials erstreckt. Auf der anderen Seite der zweiten Oberfläche des zellulären Materials wird mindestens ein Faserbündel bereitgestellt, wobei dieses Faserbündel mit einer Nadel durch das Loch auf die erste Seite des zellulären Materials gezogen wird. Bevor die Nadel das Faserbündel fasst, wird die Nadel jedoch zunächst von der ersten Seite des zellulären Materials kommend durch das jeweilige Loch gezogen. Weiterhin befindet sich das Faserbündel mit Abschluss des Verfahrens gemäß WO 2006/125561 teilweise innerhalb des zellulären Materials, da es das entsprechende Loch ausfüllt, teilweise ragt das entsprechende Faserbündel auf den jeweiligen Seiten aus der ersten sowie zweiten Oberfläche des zellulären Materials heraus.

Durch das in WO 2006/125561 beschriebene Verfahren können sandwichartige Komponenten hergestellt werden, die einen Kern aus besagtem zellulären Material sowie mindestens ein Faserbündel umfassen. An den Oberflächen dieses Kernes können Harzschichten und faserverstärkte Harzschichten aufgebracht werden, um die eigentliche sandwichartige Komponente herzustellen. Als zelluläres Material zur Ausbildung des Kerns der sandwichartigen Komponente können beispielsweise Polyvinylchloride oder Polyurethane eingesetzt werden. Als Faserbündel kommen beispielsweise Kohlenstofffasern, Nylonfasern, Glasfasern oder Polyesterfasern in Frage.

WO 2006/125561 offenbart jedoch nicht, dass auch Extrusionsschaumstoffe als zelluläres Material zur Herstellung eines Kerns in einer sandwichartigen Komponente verwendet werden können. Die sandwichartigen Komponenten gemäß WO 2006/125561 eignen sich zur Verwendung im Flugzeugbau.

WO 2011/012587 betrifft ein weiteres Verfahren zur Herstellung eines Kerns mit integrierten Brückenfasern für Paneele aus Kompositmaterialien. Der Kern wird hergestellt, indem durch einen so genannten "Kuchen" aus Leichtmaterial die auf einer Oberfläche des entsprechenden Kuchens bereitgestellten Brückenfasern mit Hilfe einer Nadel teilweise oder vollständig durchgezogen werden. Der "Kuchen" kann aus Polyurethanschäumen, Polyesterschäumen, Polyethylenterephthalatschäumen, Polyvinylchloridschäumen oder einem phenolischen Schaum, insbesondere aus einem Polyurethanschaum ausgebildet sein. Als Fasern können prinzipiell jegliche Art von einfachen oder mehrfachen Fäden sowie sonstige Garne verwendet werden.

Die so hergestellten Kerne können wiederum Bestandteil eines Paneels aus Kompositmaterialien sein, wobei der Kern einseitig oder zweiseitig von einer Harzmatrix und Kombinationen aus Harzmatrizes mit Fasern in einer sandwichartigen Ausgestaltung umgeben ist. WO 2011/012587 offenbart jedoch nicht, dass Extrusionsschaumstoffe zur Herstellung des entsprechenden Kernmaterials eingesetzt werden können.

WO 2012/138445 betrifft ein Verfahren zur Herstellung eines Komposit-Kernpaneels unter Verwendung einer Vielzahl von länglichen Streifen aus einem zellulären Material mit einer niedrigen Dichte. Zwischen die jeweiligen Streifen wird eine doppellagige Fasermatte eingebracht, die unter Verwendung von Harz ein Verkleben der einzelnen Streifen unter Ausbildung der Komposit-Kernpaneele bewirkt. Das zelluläre Material mit niedriger Dichte, das die länglichen Streifen ausbildet, ist gemäß WO 2012/138445 ausgewählt aus Balsaholz, elastischen Schäumen oder faserverstärkten Kompositschäumen. Bei den doppellagig zwischen den einzelnen Streifen eingebrachten Fasermatten kann es sich beispielsweise um eine poröse Glasfasermatte handeln. Das als Kleber verwendete Harz kann beispielsweise ein Polyester, ein Epoxy- oder ein phenolisches Harz sein oder ein durch Wärme aktivierter Thermoplast, beispielsweise Polypropylen oder PET. WO 2012/138445 offenbart jedoch nicht, dass als zelluläres Material für die verlängerten Streifen auch ein Extrusionsschaumstoff verwendet werden kann. Ebenso wenig ist darin offenbart, dass einzelne Fasern oder Faserbündel in das zelluläre Material zur Verstärkung eingebaut werden können. Gemäß WO 2012/138445 werden hierfür ausschließlich Fasermatten eingesetzt, die zudem ein Verbindungsglied im Rahmen einer Verklebung der einzelnen Streifen mittels Harz unter Erhalt des Kernmaterials darstellen.

GB-A 2 455 044 offenbart ein Verfahren zur Herstellung eines mehrschichtigen Kompositartikels, wobei in einem ersten Verfahrensschritt eine Vielzahl von Pellets aus thermoplastischem Material sowie einem Treibmittel bereitgestellt werden. Das thermoplastische Material ist ein Gemisch aus Polystyrol (PS) und Polyphenylenoxid (PPO), das mindestens 20 bis 70 Gew.-% PPO enthält. In einem zweiten Verfahrensschritt werden die Pellets expandiert und in einem dritten Schritt in einer Form unter Ausbildung eines geschlossenzelligen Schaums aus dem thermoplastischen Material zu einem Formkörper verschweißt, wobei der geschlossenzellige Schaum die Gestalt der Form annimmt. Im nächsten Verfahrensschritt wird auf die Oberfläche des geschlossenzelligen Schaums eine Schicht aus faserverstärktem Material aufgebracht, wobei die Anbindung der jeweiligen Oberflächen unter Verwendung von einem Epoxidharz durchgeführt wird. GB-A 2 455 044 offenbart jedoch nicht, dass ein Fasermaterial in den Kern des mehrschichtigen Kompositartikels eingebracht werden kann.

Ein sinngemäßes Verfahren bzw. ein sinngemäßer mehrschichtiger Kompositartikel (wie in GB-A 2 455 044) ist auch in WO 2009/047483 offenbart. Diese mehrschichtigen Kompositartikel eignen sich beispielsweise zur Verwendung von Rotorblättern (in Windturbinen) oder als Bootrumpf.

US-B 7,201,625 offenbart ein Verfahren zur Herstellung von Schaumprodukten sowie die Schaumprodukte als solche, die beispielsweise im Sportbereich als Surfbrett eingesetzt werden können. Den Kern des Schaumproduktes bildet ein Partikelschaum, beispielsweise auf Basis eines Polystyrolschaums. Dieser Partikelschaum wird in einer speziellen Form hergestellt, wobei eine Plastikaußenhaut den Partikelschaum umschließt. Die Plastikaußenhaut kann beispielsweise ein Polyethylenfilm sein. Auch US-B 7,201,625 offenbart jedoch nicht, dass im Partikelschaum Fasern zur Verstärkung des Materials enthalten sein können.

US-B 6,767,623 offenbart Sandwichpaneele, die eine Kernschicht aus Polypropylenpartikelschaum auf der Basis von Partikeln mit einer Partikelgröße im Bereich von 2 bis 8 mm und einer Schüttdichte im Bereich von 10 bis 100 g/l aufweisen. Weiterhin umfassen die Sandwichpaneele zwei Deckschichten aus faserverstärktem Polypropylen, wobei die einzelnen Deckschichten so um den Kern angeordnet sind, dass ein Sandwich ausgebildet wird. Gegebenenfalls können noch weitere Schichten zu dekorativen Zwecken in den Sandwichpaneelen enthalten sein. Die Deckschichten können Glasfasern oder sonstige Polymerfasern enthalten.

EP-A 2 420 531 offenbart Extrusionsschaumstoffe auf Basis eines Polymers wie Polystyrol, in denen mindestens ein mineralischer Füllstoff mit einer Partikelgröße von $\leq 10\ \mu m$ und mindestens ein Keimbildner enthalten sind. Diese Extrusionsschaumstoffe zeichnen sich durch ihre verbesserte Steifigkeit aus. Weiterhin wird ein entsprechendes Extrusionsverfahren zur Herstellung solcher Extrusionsschaumstoffe auf Basis von Polystyrol beschrieben. Die Extrusionsschaumstoffe können geschlossenzellig sein. Die EP-A 2 480 531 beschreibt allerdings nicht, dass die Extrusionsschaumstoffe Fasern enthalten.

WO 2005/056653 betrifft Partikelschaumstoffformteile aus expandierbaren, Füllstoff enthaltenden Polymergranulaten. Die Partikelschaumstoffformteile sind erhältlich durch Verschweißen von vorgeschäumten Schaumpartikeln aus expandierbaren, Füllstoff enthaltenden, thermoplastischen Polymergranulaten, wobei der Partikelschaumstoff eine Dichte im Bereich von 8 bis 300 g/l aufweist. Bei den thermoplastischen Polymergranulaten handelt es sich insbesondere um ein Styrolpolymer. Als Füllstoff können pulverförmige anorganische Stoffe, Metall, Kreide, Aluminiumhydroxid, Kalziumcarbonat oder Tonerde oder kugel- oder faserförmige anorganische Stoffe wie Glaskugeln, Glasfasern oder Kohlefasern eingesetzt werden.

US 3,030,256 betrifft laminierte Paneele, zu deren Herstellung ein Kern, der aus einem Schaumstoff oder einem expandierten Polymer hergestellt ist, mit Fasern verstärkt wird. Als Material für den Kern sind expandiertes und extrudiertes Polystyrol sowie Phenole, Epoxide und Polyurethane beschrieben. Zum Einbringen der Fasern wird mit einer Nadel von der ersten Seite des Kerns zur zweiten Seite des Kerns ein Loch erzeugt und mit derselben Nadel ein Faserbündel von der zweiten Seite auf die erste Seite durch das Loch gezogen, sodass sich das Faserbündel teilweise innerhalb des Kerns befindet und teilweise zur ersten und zur zweiten Seite hinausragt. Das Fasermaterial wird in einem Winkel von 0° relativ zur Dickenrichtung des Kerns in den Kern eingebracht.

US 2010/196652 betrifft eine Sandwich-Struktur, umfassend ein Kernmaterial, umgeben von Glasfaserverstärkungen. Glasfaserstränge durchdringen die Struktur, so dass die Stränge entlang drei Achsen orientiert sind, die jeweils benachbarten Achsen sind dabei etwa im 120°-Winkel zueinander angeordnet. Als Schaumstoffe werden Polyurethan, Polyisocyanurat, Phenol, Polystyrol, Polyethylenimin, Polyethylene sowie Polypropylen offenbart. US 2010/196652 offenbart keinen Extrusionsschaumstoff, hergestellt nach dem Extrusionsverfahren der vorliegenden Erfindung und keinen Schaumstoff, in welchem mindestens 50 % der Zellen anisotrop sind.

US 6,291,049 betrifft eine Sandwich-Struktur, umfassend einen Kern und Oberflächen auf Ober- und Unterseite dieses Kerns. Zusätzlich offenbart US 6,291,049 Steckstifte, welche durch den Kern ragen und die Oberflächenschichten auf dem Kern befestigten. US 6,291,049 offenbart keine konkreten Schaumstoffe. Ebenfalls offenbart US 6,291,049 keinen Schaumstoff, in welchem zumindest 50 % der Zellen anisotrop sind.

Die der vorliegenden Erfindung zugrundeliegende Aufgabe besteht in der Bereitstellung von neuen faserverstärkten Formkörpern bzw. Paneelen.

Gelöst wird diese Aufgabe erfindungsgemäß durch einen Formkörper aus Extrusionsschaumstoff, bei dem mindestens eine Faser (F) sich mit einem Faserbereich (FB2) innerhalb des Formkörpers befindet und von dem Extrusionsschaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt und der Extrusionsschaumstoff hergestellt wird durch ein Extrusionsverfahren, umfassend die folgenden Schritte:

I) Bereitstellen einer Polymerschmelze in einem Extruder,

ii) Einbringen von zumindest einem Treibmittel in die in Schritt i) bereitgestellte Polymerschmelze unter Erhalt einer schäumbaren Polymerschmelze,

III) Extrusion der in Schritt II) erhaltenen schäumbaren Polymerschmelze aus dem Extruder durch zumindest eine Düsenöffnung in einen Bereich niedrigeren Drucks, wobei die schäumbare Polymerschmelze expandiert unter Erhalt eines expandierten Schaums und

IV) Kalibrieren des expandierten Schaums aus Schritt III), indem der expandierte Schaum durch ein formgebendes Werkzeug durchgeführt wird, unter Erhalt des Extrusionsschaumstoffs,

wobei die Faser (F) in einem Winkel $\alpha$ von 10 bis 70° relativ zur Dickenrichtung (d) des Formkörpers in den Extrusionsschaumstoff eingebracht ist und wobei zwei oder mehr Fasern (F) in einem Winkel $\beta$ zueinander in dem Formkörper vorliegen, wobei der Winkel $\beta$ im Bereich $\beta = 360°/n$, wobei n eine ganzzahlige Zahl ist, liegt, wobei n im Bereich von 2 bis 6 liegt, wobei der Extrusionsschaumstoff Zellen umfasst, wobei mindestens 50 % der Zellen anisotrop sind, wobei mindestens 50 % der Zellen bezogen auf ihre größte Dimension (a-Richtung) in einem Winkel $\gamma$ von $\leq 45°$ relativ zur Dickenrichtung des Formkörpers ausgerichtet sind.

Die erfindungsgemäßen Formkörper zeichnen sich in vorteilhafter Weise durch eine geringe Harzaufnahme bei gleichzeitig guter Grenzflächenanbindung aus. Dieser Effekt ist insbesondere dann von Bedeutung, wenn die erfindungsgemäßen Formkörper zu den erfindungsgemäßen Paneelen weiterverarbeitet werden.

Da der Extrusionsschaumstoff Zellen umfasst und diese zu mindestens 50 %, vorzugsweise zu mindestens 80 % und mehr bevorzugt zu mindestens 90 % anisotrop sind, sind auch die mechanischen Eigenschaften des Extrusionsschaumstoffs und damit auch die des Formkörpers anisotrop, was für die Anwendung des erfindungsgemäßen Formkörpers, insbesondere für Rotorblätter, in Windenergieanlagen, im Transportsektor, im Bausektor, im Automobilbau, im Schiffsbau, im Schienenfahrzeugbau, im Containerbau, in sanitären Anlagen und/oder in der Luft- und Raumfahrt, besonders vorteilhaft ist.

Die erfindungsgemäßen Formkörper haben aufgrund ihrer Anisotropie in zumindest einer Richtung eine besonders hohe Druckfestigkeit. Sie zeichnen sich darüber hinaus durch eine hohe Geschlossenzelligkeit und gute Vakuumstabilität aus.

Da in einer weiteren bevorzugten Ausführungsform die mindestens eine Faser (F) in einem Winkel $\epsilon \leq 60°$ relativ zu der größten Dimension der anisotropen Zellen in den Extrusionsschaumstoff eingebracht wird, wird beim Einbringen der mindestens einen Faser (F) eine geringere Zahl an Zellen zerstört als bei den im Stand der Technik beschriebenen Schaumstoffen, was sich ebenfalls positiv auf die Harzaufnahme des Formkörpers bei Verarbeitung zu einem Paneel auswirkt.

Zudem ist aufgrund der Anisotropie der Zellen der Nähwiderstand in einer erfindungsgemäßen Ausführungsform eines Verfahrens zur Herstellung von Formkörpern geringer als bei Schaumstoffen, die im Stand der Technik beschrieben sind. Dies ermöglicht einen schnelleren Nähprozess, zudem verlängert sich die Haltbarkeit der Nadel. Dies macht das erfindungsgemäße Verfahren besonders wirtschaftlich.

Eine weitere Verbesserung der Anbindung bei gleichzeitig reduzierter Harzaufnahme wird erfindungsgemäß durch die Faserverstärkung der Extrusionsschaumstoffe in den erfindungsgemäßen Formkörpern bzw. den daraus resultierenden Paneelen ermöglicht. Erfindungsgemäß können die Fasern (einzeln oder vorzugsweise als Faserbündel) in vorteilhafter Weise zunächst trocken und/oder durch mechanische Prozesse in den Extrusionsschaumstoff eingebracht werden. Die Fasern bzw. Faserbündel werden an den jeweiligen Extrusionsschaumstoffoberflächen nicht bündig, sondern mit Überstand abgelegt und ermöglichen damit eine verbesserte Anbindung bzw. eine direkte Verbindung mit den entsprechenden Decklagen im erfindungsgemäßen Paneel. Dies ist insbesondere dann der Fall, wenn als Decklage erfindungsgemäß mindestens eine weitere Schicht (S1) unter Ausbildung eines Paneels auf die erfindungsgemäßen Formkörper aufgebracht wird. Vorzugsweise werden zwei Schichten (S1), die gleich oder verschieden sein können, aufgebracht. Besonders bevorzugt werden zwei gleiche Schichten (S1), insbesondere zwei gleiche faserverstärkte Harzschichten, auf einander gegenüberliegenden Seiten des erfindungsgemäßen Formkörpers unter Ausbildung eines erfindungsgemäßen Paneels aufgebracht. Solche Paneele werden auch als "Sandwichmaterialien" bezeichnet, wobei der erfindungsgemäße Formkörper auch als "Kernmaterial" bezeichnet werden kann.

Die erfindungsgemäßen Paneele zeichnen sich somit durch eine geringe Harzaufnahme in Verbindung mit einer guten Schälfestigkeit aus. Durch die Anisotropie der Zellen und damit der mechanischen Eigenschaften des Schaumstoffs kann zudem die Knitterfestigkeit gesteuert werden. Vorteilhaft wird der Extrusionsschaumstoff so eingesetzt, dass die mechanischen Eigenschaften in Dickenrichtung des Paneels am höchsten sind und damit maximale Knitterfestigkeiten erzielt werden können. Weiterhin sind hohe Festigkeits- und Steifigkeitseigenschaften gezielt durch die Wahl der Fasertypen, deren Anteil und Anordnung einstellbar. Der Effekt einer geringen Harzaufnahme ist deswegen von Bedeutung, weil beim Einsatz von solchen Paneelen (Sandwichmaterialien) häufig das Ziel besteht, dass die strukturellen Eigenschaften bei möglichst geringem Gewicht erhöht werden sollen. Beim Einsatz von beispielsweise faserverstärkten Decklagen trägt neben den eigentlichen Decklagen und dem Formkörper (Sandwichkern) die Harzaufnahme des Formkörpers (Kernmaterials) zum Gesamtgewicht bei. Durch die erfindungsgemäßen Formkörper bzw. die erfindungsgemäßen Paneele kann die Harzaufnahme jedoch verringert werden, wodurch Gewicht sowie Kosten eingespart werden können.

Als besonderer Vorteil kann in einer Ausführungsform der erfindungsgemäßen Formkörper die geschlossene Oberfläche des Extrusionsschaumstoffs angesehen werden. Nach der Kalibrierung des Extrusionsschaumstoffes liegt in der Regel eine versiegelte (geschlossene) Oberfläche mit hoher Oberflächengüte vor, die sich durch minimale Harzaufnahme und einen Dichtegradienten, ausgehend vom Kern des Extrusionsschaumstoffs hin zur Oberfläche, auszeichnet, wobei die Dichte vom Kern des Extrusionsschaumstoffs zu dessen Oberfläche zunimmt. Insbesondere durch Kombination mit den eingebrachten Fasern zum Erhalt der erfindungsgemäßen Formkörper kann somit minimales Gewicht bei maximalen mechanischen Eigenschaften erzielt werden.

Ein weiterer Vorteil der erfindungsgemäßen Formkörper bzw. Paneele ist darin zu sehen, dass aufgrund der Verwendung von Extrusionsschaumstoffen bzw. der damit verbundenen Herstellung das Anbringen von integrierten Strukturen wie Schlitze oder Löcher auf den Oberflächen der Formkörper sowie die Weiterverarbeitung der Formkörper relativ einfach ist. Durch die kontinuierliche Fertigung lassen sich Strukturen direkt im Prozess durch formgebende Schritte wie Thermoformen oder spanender Bearbeitung integrieren. Derartige Strukturen werden beim Einsatz von solchen Formkörpern (Kernmaterialien) beispielsweise häufig zum Drapieren in gekrümmte Strukturen (tiefe Schlitze), zur Verbesserung der Verarbeitbarkeit durch Flüssigharzprozesse wie der Vakuuminfusion (Löcher) und zur Beschleunigung der genannten Verarbeitungsprozess (flache Schlitze) eingebracht.

Weiterhin können bei oder nach der Fertigung weitere Schichten (S2) auf den Extrusionsschaumstoff aufgebracht werden. Derartige Schichten verbessern den Gesamtzusammenhalt des Extrusionsschaumstoffs bzw. des erfindungsgemäßen Formkörpers.

Extrusionsschaumstoffe werden in der Regel aus thermoplastischen Polymeren hergestellt. Dadurch können sowohl die Extrusionsschaumstoffe als auch die Formkörper durch Thermoformen und damit unter Vermeidung von spanenden Bearbeitungsschritten in die gewünschten Geometrien umgeformt werden.

Weitere Verbesserungen/Vorteile können dadurch erzielt werden, dass die Fasern in einem Winkel $\alpha$ im Bereich von 10° bis 70° in Bezug zur Dickenrichtung (d) des Extrusionsschaumstoffs in den Extrusionsschaumstoff eingebracht werden, besonders bevorzugt von 30° bis 50°. Generell ist das Einbringen der Fasern in einem Winkel $\alpha$ von 0° bis < 90° technisch automatisiert durchführbar.

Zusätzliche Verbesserungen/Vorteile können dadurch erzielt werden, dass die Fasern nicht nur parallel zueinander in den Extrusionsschaumstoff eingebracht werden, sondern weitere Fasern in einem Winkel $\beta$ zueinander, der im Bereich von > 0 bis 180° liegt. Dadurch wird zusätzlich eine gezielte Verbesserung der mechanischen Eigenschaften des erfindungsgemäßen Formkörpers in unterschiedlichen Richtungen erreicht.

Ebenso ist es von Vorteil, wenn in den erfindungsgemäßen Paneelen die Harz(deck)schicht durch Flüssiginjektionsverfahren oder Flüssiginfusionsverfahren aufgebracht wird, bei dem die Fasern während der Verarbeitung mit Harz getränkt und die mechanischen Eigenschaften verbessert werden können. Zudem können dadurch Kosten eingespart werden.

Nachfolgend wird die vorliegende Erfindung weiter präzisiert.

Erfindungsgemäß umfasst der Formkörper einen Extrusionsschaumstoff und mindestens eine Faser (F).

Der Extrusionsschaumstoff wird hergestellt (bzw. ist herstellbar oder ist hergestellt worden) durch ein Extrusionsverfahren, umfassend die folgenden Schritte:

I) Bereitstellen einer Polymerschmelze in einem Extruder,

II) Einbringen von zumindest einem Treibmittel in die in Schritt I) bereitgestellte Polymerschmelze unter Erhalt einer schäumbaren Polymerschmelze,

III) Extrusion der in Schritt II) erhaltenen schäumbaren Polymerschmelze aus dem Extruder durch zumindest eine Düsenöffnung in einen Bereich niedrigeren Drucks, wobei die schäumbare Polymerschmelze expandiert unter Erhalt eines expandierten Schaums und

IV) Kalibrieren des expandierten Schaums aus Schritt III), indem der expandierte Schaum durch ein formgebendes Werkzeug durchgeführt wird, unter Erhalt des Extrusionsschaumstoffs,

wobei die Faser (F) in einem Winkel $\alpha$ von 10 bis 70°C relativ zur Dickenrichtung (d) des Formkörpers in den Extrusionsschaumstoff eingebracht ist und wobei zwei oder mehr Fasern (F) in einem Winkel $\beta$ zueinander in dem Formkörper vorliegen, wobei der Winkel β im Bereich von β = 360°/n, wobei n eine ganzzahlige Zahl ist, liegt, wobei n im Bereich von 2 bis 6 liegt, wobei der Extrusionsschaumstoff Zellen umfasst, wobei mindestens 50 % der Zellen anisotrop sind, wobei mindestens 50 % der Zellen bezogen auf ihre größte Dimension (a-Richtung) in einem Winkel γ von ≤ 45° relativ zur Dickenrichtung des Formkörpers ausgerichtet sind.

Zur Bereitstellung der Polymerschmelze in dem Extruder in Schritt I) eignen sich prinzipiell alle dem Fachmann bekannten Methoden, beispielsweise kann die Polymerschmelze in dem Extruder bereitgestellt werden, indem ein bereits fertig polymerisiertes Polymer aufgeschmolzen wird. Das Polymer kann direkt in dem Extruder aufgeschmolzen werden, ebenso ist es möglich, das Polymer in geschmolzener Form dem Extruder zuzuführen und so die Polymerschmelze in Schritt I) in dem Extruder bereitzustellen. Ebenso ist es möglich, dass die Polymerschmelze in Schritt I) bereitgestellt wird, indem die entsprechenden zur Herstellung des Polymers der Polymerschmelze benötigten Monomere zu dem Polymer miteinander in dem Extruder reagieren und so die Polymerschmelze bereitgestellt wird.

Unter einer Polymerschmelze wird vorliegend verstanden, dass das Polymer oberhalb der Schmelztemperatur ($T_M$) bei teilkristallinen Polymeren bzw. der Glasübergangstemperatur ($T_G$) bei amorphen Polymeren vorliegt.

Üblicherweise liegt die Temperatur der Polymerschmelze in Verfahrensschritt I) im Bereich von 100 bis 450 °C, bevorzugt im Bereich von 150 bis 350 °C und insbesondere bevorzugt im Bereich von 160 bis 300 °C.

In Schritt II) wird zumindest ein Treibmittel in die in Schritt I) bereitgestellte Polymerschmelze eingebracht. Verfahren hierzu sind dem Fachmann als solche bekannt.

Geeignete Treibmittel sind beispielsweise ausgewählt aus der Gruppe bestehend aus Kohlenstoffdioxid, Alkanen, wie Propan, Isobutan und Pentan, Alkoholen, wie Methanol, Ethanol, 1-Propanol, 2-Propanol, 1-Butanol, 2-Butanol, 2-Methylpropanol und tert-Butanol, Ethern wie Dimethylether, Ketonen, wie Aceton und Methylethylketon, halogenierten Kohlenwasserstoffen, wie Hydrofluorpropen, Wasser, Stickstoff und Mischungen aus diesen.

In Schritt II) wird so die schäumbare Polymerschmelze erhalten. Die schäumbare Polymerschmelze enthält üblicherweise im Bereich von 1 bis 15 Gew.-% des zumindest einen Treibmittels, bevorzugt im Bereich von 2 bis 10 Gew.-% und insbesondere bevorzugt im Bereich von 3 bis 8 Gew.-%, jeweils bezogen auf das Gesamtgewicht der schäumbaren Polymerschmelze .

Der Druck im Extruder in Schritt II) liegt üblicherweise im Bereich von 20 bis 500 bar, bevorzugt im Bereich von 50 bis 400 bar und insbesondere bevorzugt im Bereich von 60 bis 300 bar.

In Schritt III) wird die in Schritt II) erhaltene schäumbare Polymerschmelze durch zumindest eine Düsenöffnung aus dem Extruder in einen Bereich niedrigeren Drucks extrudiert, wobei die schäumbare Polymerschmelze expandiert unter Erhalt des expandierten Schaums.

Verfahren zur Extrusion der schäumbaren Polymerschmelze sind dem Fachmann als solche bekannt.

Für die Extrusion der schäumbaren Polymerschmelze eignen sich alle dem Fachmann bekannten Düsenöffnungen. Die Düsenöffnung kann jede beliebige Form aufweisen, beispielsweise kann sie rechteckig, kreisförmig, ellipsenförmig, quadratisch oder hexagonal sein. Bevorzugt sind rechteckige Schlitzdüsen und kreisförmige Runddüsen.

In einer Ausführungsform wird die schäumbare Polymerschmelze durch genau eine Düsenöffnung, vorzugsweise durch eine Schlitzdüse, extrudiert. In einer weiteren Ausführungsform wird die schäumbare Polymerschmelze durch eine Vielzahl von Düsenöffnungen, vorzugsweise kreisförmige oder hexagonale Düsenöffnungen, extrudiert unter Erhalt einer Vielzahl von Strängen, wobei die Vielzahl von Strängen direkt nach dem Austreten aus den Düsenöffnungen zusammengeführt werden und den expandierten Schaums ausbilden. Die Vielzahl von Strängen kann auch erst in Schritt IV) durch das Durchführen durch das formgebende Werkzeug zusammengeführt werden.

Vorzugsweise ist die zumindest eine Düsenöffnung beheizt. Insbesondere bevorzugt wird die Düsenöffnung mindestens auf die Glasübergangstemperatur ($T_G$) des in der in Schritt I) bereitgestellten Polymerschmelze enthaltenen Polymers, wenn das Polymer ein amorphes Polymer ist, und mindestens auf die Schmelztemperatur ($T_M$) des in der in Schritt I) bereitgestellten Polymerschmelze enthaltenen Polymers, wenn das Polymer ein teilkristallines Polymer ist, geheizt, beispielsweise liegt die Temperatur der Düsenöffnung im Bereich von 80 bis 400 °C, vorzugsweise im Bereich von 100 bis 350 °C und insbesondere bevorzugt im Bereich von 110 bis 300 °C.

Die schäumbare Polymerschmelze wird in Schritt III) in einen Bereich niedrigeren Drucks extrudiert. Der Druck im Bereich niedrigeren Drucks liegt üblicherweise im Bereich von 0,05 bis 5 bar, bevorzugt im Bereich von 0,5 bis 1,5 bar.

Der Druck mit dem die schäumbare Polymerschmelze in Schritt III) aus der Düsenöffnung extrudiert wird, liegt üblicherweise im Bereich von 20 bis 600 bar, bevorzugt im Bereich von 40 bis 300 bar und insbesondere bevorzugt im Bereich von 50 bis 250 bar.

In Schritt IV) wird der expandierte Schaum aus Schritt III) kalibriert, indem der expandierte Schaum durch ein formgebendes Werkzeug durchgeführt wird unter Erhalt des Extrusionsschaumstoffs.

Durch die Kalibrierung des expandierten Schaums wird die Außenkontur des in Schritt IV) erhaltenen Extrusionsschaumstoffs bestimmt. Verfahren zur Kalibrierung sind dem Fachmann als solche bekannt.

Das formgebende Werkzeug kann direkt an der Düsenöffnung angeordnet sein. Ebenso ist es möglich, dass das formgebende Werkzeug von der Düsenöffnung entfernt angeordnet ist.

Formgebende Werkzeuge zum Kalibrieren des expandierten Schaums sind dem Fachmann als solche bekannt.

Geeignete formgebende Werkzeuge umfassen beispielsweise Plattenkalibrierungen, Rollenabzüge, Dornkalibrierungen, Kettenabzüge und Bandabzüge. Um den Reibungskoeffizient zwischen den formgebenden Werkzeugen und dem Extrusionsschaumstoff zu verringern, können die Werkzeuge beschichtet und/oder beheizt werden.

Durch die Kalibrierung in Schritt IV) wird also die geometrische Form des Querschnitts des erfindungsgemäßen Extrusionsschaumstoffs in mindestens einer Dimension festgelegt. Vorzugsweise weist der Extrusionsschaumstoff einen nahezu rechtwinkligen Querschnitt auf. Falls die Kalibrierung teils nur in bestimmten Richtungen vorgenommen wird, kann der Extrusionsschaumstoff von der idealen Geometrie an den freien Flächen abweichen. Die Dicke des Extrusionsschaumstoffs wird dabei einerseits durch die Düsenöffnung bestimmt, andererseits auch durch das formgebende Werkzeug, gleiches gilt für die Breite des Extrusionsschaumstoffes.

Bezogen auf ein rechtwinkliges Koordinatensystem wird die Länge des so erhaltenen Schaumstoffs als x-Richtung bezeichnet, die Breite als y-Richtung und die Dicke als z-Richtung. Die x-Richtung entspricht der Extrusionsrichtung des Schaumstoffs.

Weiterhin ist es erfindungsgemäß bevorzugt, dass

i) die in Schritt I) bereitgestellte Polymerschmelze mindestens ein Additiv enthält, und/oder

ii) während Schritt II) zu der Polymerschmelze und/oder zwischen Schritt II) und Schritt III) zu der schäumbaren Polymerschmelze mindestens ein Additiv gegeben wird, und/oder

iii) während Schritt III) auf den expandierten Schaum und/oder während Schritt IV) auf den expandierten Schaum mindestens ein Additiv aufgebracht wird, und/oder

iv) während und/oder direkt im Anschluss an Schritt IV) auf den Extrusionsschaumstoff mindestens eine Schicht (S2) aufgebracht wird, und/oder

v) im Anschluss an Schritt IV) der folgende Verfahrensschritt durchgeführt wird:
V) spanende Bearbeitung des in Schritt IV) erhaltenen Extrusionsschaumstoffs.

Als Additive eignen sich prinzipiell alle dem Fachmann bekannten Additive wie beispielsweise Nukleierungsmittel, Flammschutzmittel, Farben, Prozessstabilisatoren, Verarbeitungshilfsmittel, Lichtstabilisatoren und Pigmente.

Bezüglich der Schicht (S2), die in einer Ausführungsform auf den Extrusionsschaumstoff aufgebracht wird, gelten die weiter unten beschriebenen Ausführungen und Bevorzugungen.

Zur spanenden Bearbeitung des in Schritt IV) erhaltenen Extrusionsschaumstoffs in Schritt V) eignen sich prinzipiell alle dem Fachmann bekannten Methoden. Beispielsweise kann der Extrusionsschaumstoff durch sägen, fräsen, bohren oder hobeln spanend bearbeitet werden. Wenn der Extrusionsschaumstoff ein thermoplastischer Extrusionsschaumstoff ist, ist zudem ein thermisches Umformen möglich, wodurch eine spanende Verarbeitung mit Schnittverlusten und einer Schädigung der Fasern (F) vermieden werden kann.

In einer Ausführungsform der vorliegenden Erfindung werden zumindest zwei der in Schritt IV) und/oder in Schritt V) erhaltenen Extrusionsschaumstoffe miteinander verbunden unter Erhalt eines mehrlagigen Extrusionsschaumstoffs. Unter "mehrlagig" wird vorliegend ein zumindest zweilagiger Extrusionsschaumstoff verstanden, ebenso kann der Extrusionsschaumstoff beispielsweise drei-, vier- oder fünflagig sein. Dem Fachmann ist klar, dass ein zweilagiger Extrusionsschaumstoff durch das Verbinden von zwei der in Schritt IV) und/oder in Schritt V) erhaltenen Extrusionsschaumstoffe erhalten wird, ein dreilagiger durch das Verbinden von drei der erhaltenen Extrusionsschaumstoffe und so weiter. Das Miteinanderverbinden der erhaltenen Extrusionsschaumstoffe wird auch als "Fügen" bezeichnet. Geeignete Verfahren hierzu sind dem Fachmann als solche bekannt. Beispielsweise können die erhaltenen Extrusionsschaumstoffe durch Verkleben und/oder thermisches Verschweißen miteinander verbunden werden. Es versteht sich von selbst, dass der zumindest zweilagige Extrusionsschaumstoff eine größere Dicke aufweist als die zumindest zwei der in Schritt IV) und/oder in Schritt V) erhaltenen Extrusionsschaumstoffe.

Der erfindungsgemäße Extrusionsschaumstoff kann beliebige Größen aufweisen.

Der erfindungsgemäß hergestellte Extrusionsschaumstoff weist üblicherweise eine Dicke (z-Richtung) im Bereich von 4 bis 200 mm, vorzugsweise im Bereich von 5 bis 60 mm, eine Länge (x-Richtung) von mindestens 200 mm, vorzugsweise von mindestens 400 mm und eine Breite (y-Richtung) von mindestens 200 mm, vorzugsweise von mindestens 400 mm, auf.

Der Extrusionsschaumstoff weist üblicherweise eine Länge (x-Richtung) von maximal 4000 mm, bevorzugt von maximal 2500 mm, und/oder eine Breite (y-Richtung) von maximal 4000 mm, bevorzugt von maximal 2500 mm, auf.

Extrusionsschaumstoffe sind dem Fachmann als solche bekannt. In einer Ausführungsform ist der Extrusionsschaumstoff beispielsweise auf Basis von mindestens einem Polymer, das ausgewählt ist aus Polystyrol, Polyester, Polyphenylenoxid, einem aus Phenylenoxid hergestellten Copolymer, einem aus Styrol herstellten Copolymer, Polyarylethersulfon, Polyphenylensulfid, Polyaryletherketonen, Polypropylen, Polyethylen, Polyamid, Polyamidimid, Polyetherimid, Polycarbonat, Polyacrylat, Polymilchsäure, Polyvinylchlorid oder ein Gemisch davon, vorzugsweise ist das Polymer ausgewählt aus Polystyrol, Polyphenylenoxid, einem Gemisch aus Polystyrol und Polyphenylenoxid, Polyethylenterephthalat, Polycarbonat, Polyethersulfon, Polysulfon, Polyetherimid, einem aus Styrol hergestellten Copolymer oder ein Gemisch aus aus Styrol hergestellten Copolymeren. Besonders bevorzugt ist das Polymer Polystyrol, ein Gemisch aus Polystyrol und Poly(2,6-dimethylphenylenoxid), ein Gemisch aus einem Styrol-Maleinsäureanhydrid-Polymer und einem Styrol-Acrylnitril-Polymer oder ein Styrol-Maleinsäureanhydrid-Polymer (SMA).

Als Extrusionsschaumstoff sind außerdem thermoplastische Elastomere geeignet. Thermoplastische Elastomere sind dem Fachmann als solche bekannt.

Polyphenylenoxid ist vorzugsweise Poly(2,6-dimethylphenylenether), das auch als Poly(2,6-dimethylphenylenoxid) bezeichnet wird.

Geeignete aus Phenylenoxid hergestellte Copolymere sind dem Fachmann bekannt. Geeignete Comonomere zu Phenylenoxid sind dem Fachmann ebenfalls bekannt.

Ein aus Styrol hergestelltes Copolymer weist vorzugsweise als Comonomer zu Styrol ein Monomer auf, das ausgewählt ist aus $\alpha$-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat.

Außerdem ist ein erfindungsgemäßer Formkörper bevorzugt, wobei der Extrusionsschaumstoff Zellen umfasst, wobei

i) mindestens 80 %, mehr bevorzugt mindestens 90 % der Zellen anisotrop sind, und/oder

ii) das Verhältnis der größten Dimension (a-Richtung) zur kleinsten Dimension (c-Richtung) von mindestens 50 %, vorzugsweise mindestens 80 %, mehr bevorzugt mindestens 90 % der Zellen ≥ 1,05, bevorzugt im Bereich von 1,1 bis 10, insbesondere bevorzugt im Bereich von 1,2 bis 5 liegt, und/oder

iii) die mittlere Größe der kleinsten Dimension (c-Richtung) von mindestens 50 %, vorzugsweise mindestens 80 %, mehr bevorzugt mindestens 90 % der Zellen kleiner als 0,5 mm, vorzugsweise kleiner als 0,2 mm ist, und/oder

iv) mindestens 50 %, vorzugsweise mindestens 80 %, mehr bevorzugt mindestens 90 % der Zellen orthotrop oder transversal isotrop sind, und/oder

v) mindestens 80 %, bevorzugt mindestens 90 % der Zellen, bezogen auf ihre größte Dimension (a-Richtung) in einem Winkel $\gamma$ von ≤ 30°, bevorzugt von ≤ 5°, relativ zur Dickenrichtung (d) des Formkörpers ausgerichtet sind, und/oder

vi) der Extrusionsschaumstoff zu mindestens 80 %, bevorzugt zu mindestens 95 %, besonders bevorzugt zu mindestens 98 %, geschlossenzellig ist, und/oder

vii) sich die Faser (F) in einem Winkel $\varepsilon$ von ≤ 60°, bevorzugt ≤ 50°, relativ zur größten Dimension (a-Richtung) von mindestens 50 %, vorzugsweise mindestens 80 %, mehr bevorzugt mindestens 90 %, der Zellen des Extrusionsschaumstoffs befindet.

Eine anisotrope Zelle weist in unterschiedlichen Raumrichtungen unterschiedliche Dimensionen auf. Die größte Dimension der Zelle wird als a-Richtung und die kleinste Dimension als c-Richtung bezeichnet, die dritte Dimension wird als b-Richtung bezeichnet.

Die mittlere Größe der kleinsten Dimension (c-Richtung) von mindestens 50 %, vorzugsweise mindestens 80 %, mehr bevorzugt mindestens 90 % der Zellen liegt üblicherweise im Bereich von 0,01 bis 1 mm, vorzugsweise im Bereich von 0,02 bis 0,5 mm und insbesondere im Bereich von 0,02 bis 0,3 mm.

Die mittlere Größe der größten Dimension (a-Richtung) von mindestens 50 %, vorzugsweise mindestens 80 %, mehr bevorzugt mindestens 90 %, der Zellen liegt üblicherweise im Bereich von maximal 20 mm, bevorzugt im Bereich von 0,01 bis 5 mm, insbesondere im Bereich von 0,03 bis 1 mm, und besonders bevorzugt zwischen 0,03 und 0,5 mm.

Die Dimensionen der Zellen können beispielsweise durch lichtmikroskopische oder rasterelektronenmikroskopische Aufnahmen bestimmt werden.

Unter einer orthotropen Zelle wird ein Sonderfall einer anisotropen Zelle verstanden. Orthotrop bedeutet, dass die Zellen drei Symmetrieebenen aufweisen. Im Fall, dass die Symmetrieebenen orthogonal zueinander orientiert sind, ist bezogen auf ein rechtwinkliges Koordinatensystem die Dimensionen der Zelle in allen drei Raumrichtungen, also in der a-Richtung, in der b-Richtung und in der c-Richtung, unterschiedlich.

Transversal isotrop bedeutet, dass die Zellen drei Symmetrieebenen aufweisen. Gegenüber der Drehung um eine Achse, die die Schnittachse zweier Symmetrieebenen ist, sind die Zellen aber invariant. Im Fall, dass die Symmetrieebenen orthogonal zueinander orientiert sind ist nur die Dimension der Zelle einer Raumrichtung von der Dimension der Zelle der beiden anderen unterschiedlich. Beispielsweise unterscheidet sich die Dimension der Zelle in a-Richtung von der in b-Richtung und der in c-Richtung und die Dimensionen der Zelle in b-Richtung und die in c-Richtung sind gleich.

Die Geschlossenzelligkeit des Extrusionsschaumstoffs wird nach DIN ISO 4590 bestimmt (Stand deutsche Version 2003). Die Geschlossenzelligkeit beschreibt den Volumenanteil geschlossener Zellen am Gesamtvolumen des Extrusionsschaumstoffs.

Die anisotropen Eigenschaften der Zellen des Extrusionsschaumstoffs resultieren aus dem erfindungsgemäßen Extrusionsverfahren. Indem die schäumbare Polymerschmelze in Schritt III) extrudiert wird und der so erhaltene expandierte Schaum in Schritt IV) kalibriert wird, erhält der so hergestellte Extrusionsschaumstoff üblicherweise anisotrope Eigenschaften, die aus den anisotropen Zellen resultieren.

Die Eigenschaften werden zudem durch die Expansionseigenschaften und die Abzugsparameter mit beeinflusst. Expandiert die schäumbare Polymerschmelze beispielsweise unter Erhalt des expandierten Schaums sehr stark, so expandiert sie insbesondere in x-Richtung, also in der Länge, was nicht erfindungsgemäß zu einer Ausrichtung der a-Richtung der Zellen im Bereich von 50 bis 130° relativ zur Dickenrichtung (d) führt.

Wird der expandierte Schaum beispielsweise schnell abgezogen, also schnell durch das Formgebungswerkzeug hindurch bewegt, so richtet sich die a-Richtung der Zellen nicht erfindungsgemäß im Bereich von 50 bis 130° relativ zur Dickenrichtung (d) aus.

Sind die Eigenschaften des Extrusionsschaumstoffs anisotrop, so bedeutet dies, dass sich die Eigenschaften des Extrusionsschaumstoffs in verschiedenen Raumrichtungen unterscheiden. Beispielsweise kann die Druckfestigkeit des Extrusionsschaumstoffs in der Dicke (z-Richtung) anders sein als in der Länge (x-Richtung) und/oder in der Breite (y-Richtung).

Weiterhin bevorzugt ist ein erfindungsgemäßer Formkörper, bei dem

i) zumindest eines der elastischen Moduli, vorzugsweise alle elastischen Moduli des Extrusionsschaumstoffs sich gemäß eines anisotropen, vorzugsweise orthotropen oder transversal isotropen Werkstoffs verhalten, und/oder

iii) das Verhältnis der Druckfestigkeit des Extrusionsschaumstoffs in der Dicke (z-Richtung) zu der Druckfestigkeit des Extrusionsschaumstoffs in der Länge (x-Richtung) und/oder das Verhältnis der Druckfestigkeit des Extrusionsschaumstoffs in der Dicke (z-Richtung) zu der Druckfestigkeit des Extrusionsschaumstoffs in der Breite (y-Richtung) $\geq$ 1,1, vorzugsweise $\geq$ 1,5, insbesondere bevorzugt zwischen 2 und 10 ist.

Unter mechanischen Eigenschaften werden sämtliche dem Fachmann bekannten mechanischen Eigenschaften von Extrusionsschaumstoffen verstanden, wie beispielsweise die Festigkeit, Steifigkeit bzw. Elastizität, Duktilität und Zähigkeit.

Die elastischen Moduli sind dem Fachmann als solche bekannt. Zu den elastischen Moduli gehören beispielsweise das Elastizitätsmodul, das Kompressionsmodul, das Torsionsmodul und das Schubmodul "Orthotrop" in Bezug auf die mechanischen Eigenschaften bzw. die elastischen Moduli bedeutet, dass das Material drei Symmetrieebenen aufweist. Im Fall, dass die Symmetrieebenen orthogonal zueinander orientiert sind, gilt ein rechtwinkliges Koordinatensystem. Die mechanischen Eigenschaften bzw. die elastischen Moduli des Extrusionsschaumstoffs in allen drei Raumrichtungen, x-Richtung, y-Richtung und z-Richtung, unterscheiden sich damit.

"Transversal isotrop" in Bezug auf die mechanischen Eigenschaften bzw. die elastischen Moduli bedeutet, dass das Material drei Symmetrieebenen aufweist und gegenüber der Drehung um eine Achse, die die Schnittachse zweier Symmetrieebenen ist, die Moduli invariant sind. Im Fall, dass die Symmetrieebenen orthogonal zueinander orientiert sind, sind die mechanischen Eigenschaften bzw. die elastischen Moduli des Extrusionsschaumstoffs in einer Raumrichtung von denen in den beiden anderen Raumrichtungen unterschiedlich, die in den beiden anderen Raumrichtungen aber gleich. Beispielsweise unterscheiden sich die mechanischen Eigenschaften bzw. die elastischen Moduli in z-Richtung von denen in x-Richtung und in y-Richtung, die in x-Richtung und in y-Richtung sind gleich.

Die Druckfestigkeit des Extrusionsschaumstoffs des Formkörpers wird nach DIN EN ISO 844 bestimmt (gemäß Stand deutsche Version Oktober 2009).

Die Druckfestigkeit des Extrusionsschaumstoffs in der Dicke (z-Richtung) liegt üblicherweise im Bereich von 0,05 bis 5 MPa, bevorzugt im Bereich von 0,1 bis 2 MPa, besonders bevorzugt im Bereich von 0,1 bis 1 MPa.

Die Druckfestigkeit des Extrusionsschaumstoffs in der Länge (x-Richtung) und/oder in der Breite (y-Richtung) liegt üblicherweise im Bereich von 0,05 bis 5 MPa, bevorzugt im Bereich von 0,1 bis 2 MPa, besonders bevorzugt im Bereich von 0,1 bis 1 MPa.

Die im Formkörper enthaltene Faser (F) ist eine einzelne Faser oder ein Faserbündel, vorzugsweise ein Faserbündel. Als Faser (F) eignen sich alle dem Fachmann bekannten Materialien, die Fasern bilden können. Beispielsweise ist die Faser (F) eine organische, anorganische, metallische, keramische Faser oder eine Kombination daraus, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser, eine polymere Faser ist vorzugsweise eine Faser aus Polyester, Polyamid, Polyaramid, Polyethylen, Polyurethan, Polyvinylchlorid, Polyimid und/oder Polyamidimid, eine Naturfaser ist vorzugsweise eine Faser aus Sisal, Hanf, Flachs, Bambus, Kokos und/oder Jute.

In einer Ausführungsform werden Faserbündel eingesetzt. Die Faserbündel setzen sich aus mehreren einzelnen Fasern (Filamenten) zusammen. Die Anzahl der Einzelfasern pro Bündel beträgt mindestens 10, bevorzugt 100 bis 100 000, besonders bevorzugt 300 bis 10 000 bei Glasfasern und 1000 bis 50 000 bei Kohlenstofffasern, und insbesondere bevorzugt 500 bis 5 000 bei Glasfasern und 2000 bis 20 000 bei Kohlenstofffasern.

Erfindungsgemäß befindet sich die mindestens eine Faser (F) mit einem Faserbereich (FB2) innerhalb des Formkörpers und ist von dem Extrusionsschaumstoff umschlossen, während ein Faserbereich (FB1) der Faser (F) aus einer ersten Seite des Formkörpers herausragt und ein Faserbereich (FB3) der Faser (F) aus einer zweiten Seite des Formkörpers herausragt.

Der Faserbereich (FB1), der Faserbereich (FB2) und der Faserbereich (FB3) können jeweils einen beliebigen Anteil der Gesamtlänge der Faser (F) ausmachen. In einer Ausführungsform machen der Faserbereich (FB1) und der Faserbereich (FB3) jeweils unabhängig voneinander 1 bis 45 %, vorzugsweise 2 bis 40 % und besonders bevorzugt 5 bis 30 %, und der Faserbereich (FB2) 10 bis 98 %, vorzugsweise 20 bis 96 %, besonders bevorzugt 40 bis 90 % der Gesamtlänge der Faser (F) aus.

In einer weiteren bevorzugten Ausführungsform liegt die erste Seite des Formkörpers, aus der der Faserbereich (FB1) der Faser (F) herausragt, der zweiten Seite des Formkörpers gegenüber, aus der der Faserbereich (FB3) der Faser (F) herausragt.

Die Faser (F) ist in einem Winkel $\alpha$ von 10 bis 70° relativ zu Dickenrichtung (d) des Formkörpers bzw. zur Orthogonalen (der Oberfläche) der ersten Seite des Formkörpers in den Formkörper eingebracht. Bevorzugt ist die Faser (F) in einem Winkel $\alpha$ von 30 bis 60°, vorzugsweise von 30 bis 50°, noch mehr bevorzugt von 30 bis 45°, insbesondere von 45°, relativ zur Dickenrichtung (d) des Formkörpers in den Extrusionsschaumstoff eingebracht.

Bevorzugt werden alle Fasern (F) in einem Winkel $\alpha$ im Bereich von 10 bis 70°, bevorzugt von 30 bis 60°, insbesondere bevorzugt von 30 bis 50°, noch mehr bevorzugt von 30 bis 45°, am meisten bevorzugt von 45°, relativ zur Dickenrichtung (d) des Formkörpers in den Extrusionsschaumstoff eingebracht.

Es ist darüber hinaus bevorzugt, dass außer der mindestens einen Faser (F) keine weitere Faser in den Extrusionsschaumstoff eingebracht wird.

Vorzugsweise enthält ein erfindungsgemäßer Formkörper eine Vielzahl von Fasern (F), vorzugsweise als Faserbündel, und/oder umfasst mehr als 10 Fasern (F) oder Faserbündel pro m$^2$, bevorzugt mehr als 1000 pro m$^2$, besonders bevorzugt 4000 bis 40 000 pro m$^2$. Vorzugsweise weisen sämtliche Fasern (F) im erfindungsgemäßen Formkörper den gleichen Winkel $\alpha$ oder zumindest einen annähernd gleichen Winkel (Abweichung von maximal $^+$/- 5°, vorzugsweise $^+$/- 2°, besonders bevorzugt $^+$/- 1°) auf.

Erfindungsgemäß liegen zwei oder mehr Fasern (F) in einem Winkel $\beta$ zueinander in dem Formkörper vor. Unter dem Winkel $\beta$ wird im Rahmen der vorliegenden Erfindung der Winkel zwischen der senkrechten Projektion einer ersten Faser (F1) auf die Oberfläche der ersten Seite des Formkörpers und der senkrechten Projektion einer zweiten Faser (F2) auf die Oberfläche des Formkörpers verstanden, wobei beide Fasern in den Formkörper eingebracht sind.

Der Winkel $\beta$ liegt erfindungsgemäß im Bereich $\beta = 360°/n$, wobei n eine ganzzahlige Zahl ist. Erfindungsgemäß liegt n im Bereich von 2 bis 6, bevorzugt im Bereich von 2 bis 4. Beispielsweise liegt der Winkel $\beta$ bei 90°, 120° oder 180°. In einer weiteren Ausführungsform werden mehr als zwei Fasern (F) in einem Winkel $\beta$ zueinander eingebracht, beispielsweise drei oder vier Fasern (F). Diese drei oder vier Fasern (F) können jeweils zu den beiden benachbarten Fasern zwei unterschiedliche Winkel $\beta$, $\beta_1$ und $\beta_2$, aufweisen. Bevorzugt weisen alle Fasern (F) zu den beiden benachbarten Fasern (F) die gleichen Winkel $\beta=\beta_1=\beta_2$ auf. Beispielsweise beträgt der Winkel $\beta$ 90°, dann beträgt der Winkel $\beta_1$ zwischen der ersten Faser (F1) und der zweiten Faser (F2) 90°, der Winkel $\beta_2$ zwischen der zweiten Faser (F2) und dritten Faser (F3) 90°, der Winkel $\beta_3$ zwischen der dritten und vierten Faser (F4) 90 ° und der Winkel $\beta_4$ zwischen der vierten Faser (F4) und der ersten Faser (F1) ebenfalls 90 °. Als Winkel $\beta$ zwischen der ersten Faser (F1) (Referenz) und der zweiten (F2), dritten (F3) und vierten Faser (F4) ergeben sich dann im Uhrzeigersinn 90°, 180° und 270°. Analoge Betrachtungen gelten für die anderen möglichen Winkel.

Die erste Faser (F1) weist dann eine erste Richtung auf, die zweite Faser (F2), die in einem Winkel $\beta$ zur ersten Faser (F1) angeordnet ist, weist eine zweite Richtung auf.

Bevorzugt liegen in der ersten Richtung und der zweiten Richtung eine ähnliche Anzahl von Fasern. Unter "ähnlich" wird vorliegend verstanden, dass der Unterschied zwischen der Anzahl der Fasern in jeder Richtung relativ zu der anderen Richtung < 30 %, besonders bevorzugt < 10 % und insbesondere bevorzugt < 2 % ist. Die Fasern oder Faserbündel können in irregulären oder regulären Mustern eingebracht werden. Bevorzugt ist das Einbringen von Fasern oder Faserbündeln in regulären Mustern. Unter "regulären Mustern" wird im Rahmen der vorliegenden Erfindung verstanden, dass sämtliche Fasern parallel zueinander ausgerichtet sind und dass mindestens eine Faser oder Faserbündel zu allen direkt benachbarten Fasern oder Faserbündeln den gleichen Abstand (a) aufweist. Insbesondere bevorzugt weisen alle Fasern oder Faserbündel zu allen direkt benachbarten Fasern oder Faserbündeln den gleichen Abstand auf.

In einer weiteren bevorzugten Ausführungsform werden die Fasern oder Faserbündel so eingebracht, dass sie, bezogen auf ein rechtwinkliges Koordinatensystem, bei dem die Dickenrichtung (d) der z-Richtung entspricht, entlang der x-Richtung jeweils zueinander den gleichen Abstand ($a_x$) haben und entlang der y-Richtung den gleichen Abstand ($a_y$). Insbesondere bevorzugt weisen sie in x-Richtung und in y-Richtung den gleichen Abstand (a) auf, wobei $a=a_x=a_y$, ist.

Vorzugsweise weisen die ersten Fasern (F1), die parallel zueinander vorliegen, ein reguläres Muster mit einem ersten Abstand ($a_1$) auf. Vorzugsweise weisen die zweiten Fasern (F2), die parallel zueinander vorliegen und in einem Winkel $\beta$ zu den ersten Fasern (F1) liegen, ein reguläres Muster mit einem zweiten Abstand ($a_2$) auf.

In einer bevorzugten Ausführungsform weisen die ersten Fasern (F1) und die zweiten Fasern (F2) jeweils ein reguläres Muster mit einem Abstand (a) auf. Dann gilt $a=a_1=a_2$.

Grundsätzlich ist bevorzugt, dass die Fasern oder Faserbündel innerhalb jeder Richtung einem regulären Muster folgen.

In einer bevorzugten Ausführungsform des Formkörpers gemäß der vorliegenden Erfindung

i) weist die Oberfläche von mindestens einer Seite des Formkörpers mindestens eine Vertiefung auf, vorzugsweise ist die Vertiefung ein Schlitz oder ein Loch, mehr bevorzugt wird mindestens eine Vertiefung auf der Oberfläche von mindestens einer Seite des Formkörpers im Anschluss an die Durchführung von Schritt IV) des Extrusionsverfahrens erzeugt, und/oder

ii) weist die Oberfläche von mindestens einer Seite des Formkörpers mindestens eine Vertiefung auf, vorzugsweise ist die Vertiefung ein Schlitz oder ein Loch, mehr bevorzugt wird mindestens eine Vertiefung auf der Oberfläche von mindestens einer Seite des Formkörpers in Anschluss an die Durchführung von Schritt V) des Extrusionsverfahrens erzeugt.

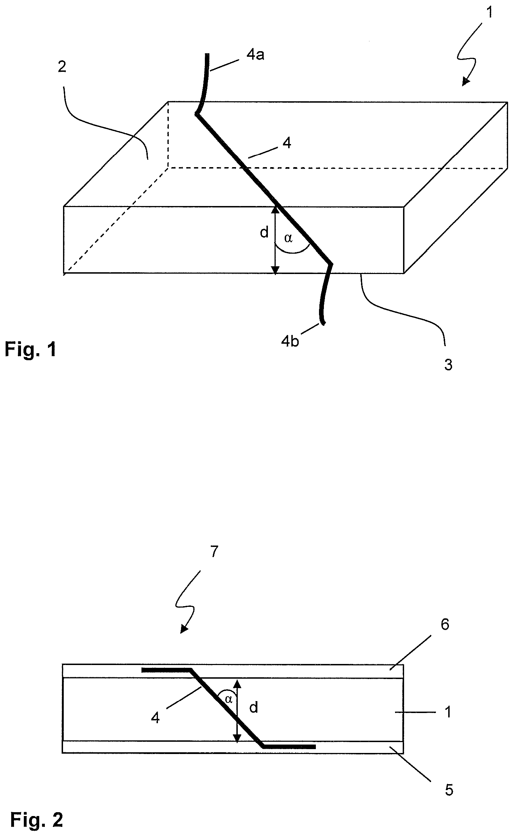

Figur 1 zeigt eine schematische Darstellung einer bevorzugten Ausführungsform des erfindungsgemäßen Formkörpers aus Extrusionsschaumstoff (1) in einer perspektivischen Ansicht. (2) stellt dabei (die Oberfläche) einer ersten Seite des Formkörpers dar, während (3) eine zweite Seite des entsprechenden Formkörpers darstellt. Wie aus Figur 1 weiterhin ersichtlich, liegt die erste Seite (2) des Formkörpers gegenüber der zweiten Seite (3) dieses Formkörpers. Die Faser (F) ist durch (4) dargestellt. Ein Ende dieser Faser (4a) und somit der Faserbereich (FB1) ragt aus der ersten Seite (2) des Formkörpers heraus, während das andere Ende (4b) der Faser, das den Faserbereich (FB3) darstellt, aus der zweiten Seite (3) des Formkörpers herausragt. Der mittlere Faserbereich (FB2) befindet sich innerhalb des Formkörpers und ist somit von dem Extrusionsschaumstoff umschlossen.

In Figur 1 befindet sich die Faser (4), die beispielsweise eine einzelne Faser oder ein Faserbündel, vorzugsweise ein Faserbündel, ist, in einem Winkel $\alpha$ relativ zu Dickenrichtung (d) des Formkörpers bzw. zur Orthogonalen (der Oberfläche) der ersten Seite (2) des Formkörpers. Der Winkel $\alpha$ beträgt 10 bis 70°, vorzugsweise 30 bis 60, besonders bevorzugt 30 bis 50°, ganz besonders 30 bis 45°, insbesondere 45°. In Figur 1 ist der Übersichtlichkeit halber nur eine einzelne Faser (F) dargestellt.

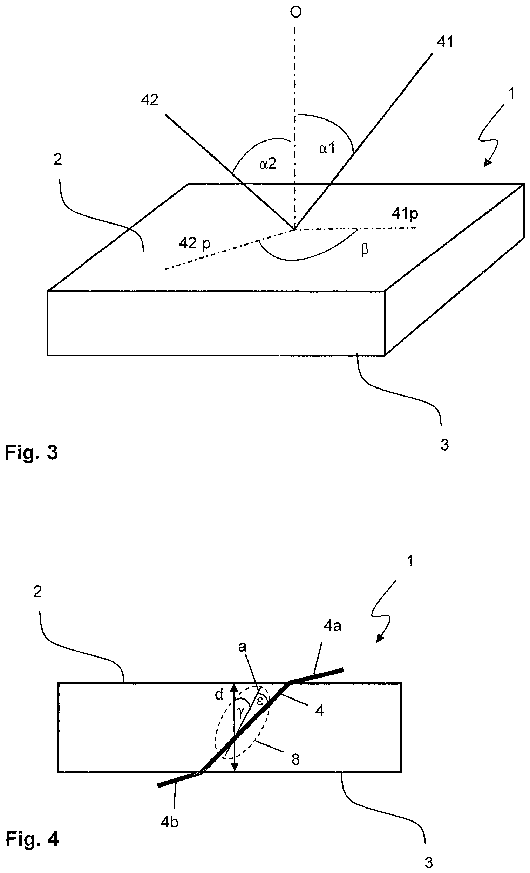

Figur 3 zeigt beispielhaft eine schematische Darstellung eines Teils der verschiedenen Winkel. Der in Figur 3 dargestellte Formkörper aus Extrusionsschaumstoff (1) enthält eine erste Faser (41) und eine zweite Faser (42). In Figur 3 ist zur besseren Übersichtlichkeit lediglich der Faserbereich (FB1), der aus der ersten Seite (2) des Formkörpers herausragt, für die beiden Fasern (41) und (42) eingezeichnet. Die erste Faser (41) bildet relativ zur Orthogonalen (O) der Oberfläche der ersten Seite (2) des Formkörpers einen ersten Winkel $\alpha$ ($\alpha$1). Die zweite Faser (42) bildet relativ zur Orthogonalen (O) der Oberfläche der ersten Seite (2) einen zweiten Winkel $\alpha$ ($\alpha$2). Die senkrechte Projektion der ersten Faser (41) auf die erste Seite (2) des Formkörpers (41p) bildet mit der senkrechten Projektion der zweiten Faser (42) auf die erste Seite (2) des Formkörpers (42p) den Winkel $\beta$.

Figur 4 zeigt beispielhaft eine schematische Darstellung der verschiedenen Winkel, die auf die größte Dimension (a-Richtung) der Zelle (8) bezogen sind. Der in Figur 4 dargestellte Formkörper aus Extrusionsschaumstoff (1) enthält eine Faser (4) und eine Zelle (8). Der Übersichtlichkeit halber ist in Figur 4 nur eine Faser (4) und eine Zelle (8) dargestellt. Es versteht sich von selbst, dass der Formkörper üblicherweise mehr als eine Zelle (8) umfasst. Die größte Dimension (a) der Zelle (8) weist relativ zur Dickenrichtung (d) des Formkörpers einen Winkel $\gamma$ von $\leq 45°$, vorzugsweise von $\leq 30°$, mehr bevorzugt von $\leq 5°$ auf. Die Faser (4) ist in einem Winkel $\varepsilon$ von $\leq 60°$, bevorzugt von $\leq 50°$ relativ zur größten Dimension (a) der Zelle (8) in den Extrusionsschaumstoff eingebracht.

Gegenstand der vorliegenden Erfindung ist außerdem ein Paneel, das mindestens einen erfindungsgemäßen Formkörper und mindestens eine Schicht (S1) umfasst. Ein "Paneel" kann gegebenenfalls in Fachkreisen auch als "Sandwich", "Sandwichmaterial", "Laminat" und/oder "Compositartikel" bezeichnet werden.

In einer bevorzugten Ausführungsform des Paneels weist das Paneel zwei Schichten (S1) auf, und die beiden Schichten (S1) sind jeweils an einer Seite des Formkörpers angebracht, die der jeweils anderen Seite im Formkörper gegenüberliegt.

In einer Ausführungsform des erfindungsgemäßen Paneels umfasst die Schicht (S1) mindestens ein Harz, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al. (Advances in Polymer Science, 184, S. 1 - 95, 2005), Pham et al. (Ullmann's Encyclopedia of Industrial Chemistry, Vol. 13, 2012), Fahnler (Polyamide, Kunststoff Handbuch 3/4, 1998) und Younes (WO12134878 A2).

Erfindungsgemäß bevorzugt ist außerdem ein Paneel, bei dem

i) der Faserbereich (FB1) der Faser (F) teilweise oder vollständig, vorzugsweise vollständig, mit der ersten Schicht (S1) in Kontakt ist, und/oder

ii) der Faserbereich (FB3) der Faser (F) teilweise oder vollständig, vorzugsweise vollständig, mit der zweiten Schicht (S1) in Kontakt ist, und/oder

iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, besonders bevorzugt aus Glasfasern oder Kohlenstofffasern in Form von Vliesen, Gelegen oder Geweben, und/oder

iv) die mindestens eine Schicht (S1) ein Harz umfasst und der Extrusionsschaumstoff des Formkörpers des Paneels eine oberflächliche Harzaufnahme von $\leq 2000$ g/m$^2$, vorzugsweise von $\leq 1000$ g/m$^2$, mehr bevorzugt von $\leq 500$ g/m$^2$, am meisten bevorzugt von $\leq 100$ g/m$^2$, aufweist, und/oder

v) die mindestens eine Schicht (S1) ein Harz umfasst und das Paneel eine Schälfestigkeit von $\geq 200$ J/m$^2$, vorzugsweise von $\geq 500$ J/m$^2$, mehr bevorzugt von $\geq 2000$ J/m$^2$ aufweist.

Besonders niedrige Harzaufnahmen werden für den Extrusionsschaumstoff beispielsweise erreicht, indem die Oberfläche versiegelt wird oder die Formgebung des Extrusionsschaumstoffs durch thermisches Schneiden erfolgt.

Analog dazu kann bei den erfindungsgemäßen Formkörpern direkt die geschlossene Oberfläche des Extrusionsschaumstoffes nach der Fertigung verwendet werden. Nach der Kalibrierung des Extrusionsschaumstoffes liegt in der Regel eine versiegelte Oberfläche mit hoher Oberflächengüte vor, die sich durch minimale Harzaufnahme und einen Dichtegradienten mit zunehmender Dichte zur Oberfläche auszeichnet.

Die oberflächliche Harzaufnahme sowie die Schälfestigkeit werden im Rahmen der vorliegenden Erfindung, wie in den Beispielen beschrieben, bestimmt.

In einer weiteren erfindungsgemäßen Ausführungsform des Paneels enthält die mindestens eine Schicht (S1) zusätzlich mindestens ein faserförmiges Material, wobei

i) das faserförmige Material Fasern in Form von einer oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m$^2$ enthält, und/oder

ii) das faserförmige Material Fasern aus organischen, anorganischen, metallischen oder keramischen Fasern, bevorzugt polymere Fasern, Basaltfasern, Glasfasern, Kohlenstofffasern oder Naturfasern, besonders bevorzugt Glasfasern oder Kohlenstofffasern enthält.

Für die Naturfasern und die polymeren Fasern gelten die zuvor beschriebenen Ausführungen.

Eine Schicht (S1), die zusätzlich mindestens ein faserförmiges Material enthält, wird auch als faserverstärkte Schicht, insbesondere als faserverstärkte Harzschicht, sofern die Schicht (S1) ein Harz umfasst, bezeichnet.

Figur 2 zeigt eine weitere bevorzugte Ausführungsform der vorliegenden Erfindung. In einer zweidimensionalen Seitansicht ist ein erfindungsgemäßes Paneel (7) dargestellt, das einen erfindungsgemäßen Formkörper (1) umfasst, wie beispielsweise vorstehend im Rahmen der Ausführungsform zu Figur 1 dargestellt. Soweit nicht anders ausgeführt, haben die Bezugszeichen bei sonstigen Abkürzungen in den Figuren 1 und 2 die gleiche Bedeutung.

Bei der Ausführungsform gemäß Figur 2 umfasst das erfindungsgemäße Paneel zwei Schichten (S1), die durch (5) und (6) dargestellt sind. Die beiden Schichten (5) und (6) befinden sich somit an jeweils zueinander gegenüberliegenden Seiten des Formkörpers (1). Bei den beiden Schichten (5) und (6) handelt es sich vorzugsweise um Harzschichten oder faserverstärkte Harzschichten. Wie aus Figur 2 weiterhin ersichtlich, sind die beiden Enden der Faser (4) von der jeweiligen Schicht (5) bzw. (6) umschlossen.

Gegebenenfalls können zwischen dem Formkörper (1) und der ersten Schicht (5) und/oder zwischen dem Formkörper (1) und der zweiten Schicht (6) eine oder mehrere weitere Schichten enthalten sein. Wie vorstehend für Figur 1 beschrieben, ist auch in Figur 2 der Einfachheit halber eine einzige Faser (F) durch (4) dargestellt. Hinsichtlich der Anzahl an Fasern bzw. Faserbündeln in der Praxis gelten die sinngemäßen Aussagen wie vorstehend für Figur 1 aufgeführt.

Gegenstand der vorliegenden Erfindung ist weiterhin ein Verfahren zur Herstellung des erfindungsgemäßen Formkörpers, wobei mindestens eine Faser (F) in den Extrusionsschaumstoff teilweise eingebracht wird, wodurch sich die Faser (F) mit dem Faserbereich (FB2) innerhalb des Formkörpers befindet und von dem Extrusionsschaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt.

Zum Einbringen der Faser (F) und/oder eines Faserbündels eignen sich prinzipiell alle dem Fachmann bekannten Methoden. Geeignete Verfahren sind beispielsweise in WO 2006/125561 oder in WO 2011/012587 beschrieben.

In einer Ausführungsform des erfindungsgemäßen Verfahrens erfolgt das teilweise Einbringen der mindestens einen Faser (F) in den Extrusionsschaumstoff durch Einnähen unter Verwendung einer Nadel, vorzugsweise erfolgt das teilweise Einbringen durch die Schritte a) bis f):

a) gegebenenfalls Aufbringen von mindestens einer Schicht (S2) auf mindestens eine Seite des Extrusionsschaumstoffs,

b) Erzeugung von einem Loch je Faser (F) im Extrusionsschaumstoff und gegebenenfalls in der Schicht (S2), wobei sich das Loch von einer ersten Seite zu einer zweiten Seite des Extrusionsschaumstoffs und gegebenenfalls durch die Schicht (S2) erstreckt,

c) Bereitstellung von mindestens einer Faser (F) auf der zweiten Seite des Extrusionsschaumstoffs,

d) Durchführen einer Nadel von der ersten Seite des Extrusionsschaumstoffs durch das Loch zu der zweiten Seite des Extrusionsschaumstoffs und gegebenenfalls Durchführung der Nadel durch die Schicht (S2),

e) Befestigen von mindestens einer Faser (F) an der Nadel auf der zweiten Seite des Extrusionsschaumstoffs, und

f) Rückführen der Nadel samt Faser (F) durch das Loch, so dass die Faser (F) sich mit dem Faserbereich (FB2) innerhalb des Formkörpers befindet und von dem Extrusionsschaumstoff umschlossen ist, während der Faserbereich (FB1) der Faser (F) aus einer ersten Seite des Formkörpers oder gegebenenfalls der Schicht (S2) herausragt und der Faserbereich (FB3) der Faser (F) aus einer zweiten Seite des Formkörpers herausragt,

besonders bevorzugt werden die Schritte b) und d) gleichzeitig durchgeführt.

Das Aufbringen von mindestens einer Schicht (S2) in Schritt a) kann beispielsweise wie vorstehend beschrieben während und/oder direkt im Anschluss an Schritt IV) erfolgen.

In einer besonders bevorzugten Ausführungsform werden die Schritte b) und d) gleichzeitig durchgeführt. In dieser Ausführungsform wird das Loch von der ersten Seite zu der zweiten Seite des Extrusionsschaumstoffs durch das Durchführen einer Nadel von der ersten Seite des Extrusionsschaumstoffs zu der zweiten Seite des Extrusionsschaumstoffs erzeugt.

In dieser Ausführungsform kann das Einbringen der mindestens einen Faser (F) beispielsweise die folgenden Schritte umfassen:

a) gegebenenfalls Aufbringen einer Schicht (S2) auf mindestens eine Seite des Extrusionsschaumstoffs,

b) Bereitstellen von mindestens einer Faser (F) auf der zweiten Seite des Extrusionsschaumstoffs,

c) Erzeugung von einem Loch je Faser (F) im Extrusionsschaumstoff und gegebenenfalls in der Schicht (S2), wobei sich das Loch von der ersten Seite zu einer zweiten Seite des Extrusionsschaumstoffs und gegebenenfalls durch die Schicht (S2) erstreckt und wobei die Erzeugung des Lochs durch das Durchführen einer Nadel durch den Extrusionsschaumstoffs und gegebenenfalls durch die Schicht (S2) erfolgt,

d) Befestigen von mindestens einer Faser (F) an der Nadel auf der zweiten Seite des Extrusionsschaumstoffs,

e) Rückführen der Nadel samt Faser (F) durch das Loch, so dass die Faser (F) sich mit dem Faserbereich (FB2) innerhalb des Formkörpers befindet und von dem Extrusionsschaumstoff umschlossen ist, während der Faserbereich (FB1) der Faser (F) aus einer ersten Seite des Formkörpers oder gegebenenfalls aus der Schicht (S2) herausragt und der Faserbereich (FB3) aus einer zweiten Seite des Formkörpers herausragt,

f) gegebenenfalls Abschneiden der Faser (F) an der zweiten Seite und

g) gegebenenfalls Aufschneiden der an der Nadel gebildeten Schlaufe der Faser (F).

In einer bevorzugten Ausführungsform wird als Nadel eine Hakennadel eingesetzt und mindestens eine Faser (F) in Schritt d) in die Hakennadel eingehängt.

In einer weiteren bevorzugten Ausführungsform werden mehrere Fasern (F) gleichzeitig in den Extrusionsschaumstoff gemäß der vorher beschriebenen Schritte eingebracht.

Weiterhin Gegenstand der vorliegenden Erfindung ist ein Verfahren zur Herstellung des erfindungsgemäßen Paneels, bei dem die mindestens eine Schicht (S1) als reaktives viskoses Harz auf einen erfindungsgemäßen Formkörper aufgebracht und ausgehärtet wird, vorzugsweise durch Flüssigimprägnierverfahren, besonders bevorzugt durch Druck- bzw. vakuumunterstützte Imprägnierverfahren, insbesondere bevorzugt durch Vakuuminfusion oder druckunterstützte Injektionsverfahren, am meisten bevorzugt durch Vakuuminfusion. Flüssigimprägnierverfahren sind dem Fachmann als solche bekannt und werden beispielsweise in Wiley Encyclopedia of Composites (2nd Edition, Wiley, 2012), Parnas et al. (Liquid Composite Moulding, Hanser, 2000) und Williams et al. (Composites Part A, 27, S. 517 - 524, 1997) ausführlich beschrieben.

Zur Herstellung des erfindungsgemäßen Paneels können verschiedene Hilfsmaterialien eingesetzt werden. Geeignete Hilfsmaterialien für die Herstellung durch Vakuuminfusion sind beispielsweise Vakuumfolie, bevorzugt aus Nylon, Vakuumdichtband, Fließhilfe, bevorzugt aus Nylon, Trennfolie, bevorzugt aus Polyolefin, Abreißgewebe, bevorzugt aus Polyester sowie eine semipermeable Folie, vorzugsweise eine Membranfolie, besonders bevorzugt eine PTFE Membranfolie und Absaugvlies, bevorzugt aus Polyester. Die Wahl geeigneter Hilfsmaterialien richtet sich nach dem zu fertigenden Bauteil, dem gewählten Prozess und den eingesetzten Materialien, speziell dem Harzsystem. Beim Einsatz von Harzsystemen auf der Basis von Epoxid und Polyurethan werden bevorzugt Fließhilfen aus Nylon, Trennfolien aus Polyolefin, Abreißgewebe aus Polyester sowie eine semipermeable Folien als PTFE-Membranfolien und Absaugvliese aus Polyester eingesetzt.

Diese Hilfsmaterialien können auf verschiedene Arten bei den Verfahren zur Herstellung des erfindungsgemäßen Paneels eingesetzt werden. Paneele werden besonders bevorzugt aus den Formkörpern durch Aufbringung faserverstärkter Decklagen mittels Vakuuminfusion hergestellt. In einem typischen Aufbau werden zur Herstellung des erfindungsgemäßen Paneels an der Ober- und Unterseite der Formkörper faserförmige Materialien und ggf. weitere Schichten aufgebracht. Anschließend werden Abreißgewebe und Trennfolien platziert. Bei der Infusion des flüssigen Harzsystems kann mit Fließhilfen und / oder Membranfolien gearbeitet werden. Besonders bevorzugt sind die folgenden Varianten:

i) Einsatz einer Fließhilfe auf nur einer Seite des Aufbaus, und/oder

ii) Einsatz einer Fließhilfe auf beiden Seiten des Aufbaus, und/oder

iii) Aufbau mit einer semipermeablen Membran (VAP-Aufbau), diese wird vorzugsweise flächig über den Formkörper drapiert, auf dem Fließhilfen, Trennfolie und Abreißgewebe auf einer oder beiden Seiten eingesetzt werden und die semipermeable Membran durch Vakuumdichtband zur Formoberfläche hin abgedichtet wird, das Absaugvlies wird auf der Formkörper fremden Seite der semipermeablen Membran eingesetzt wodurch die Luft flächig nach oben evakuiert wird, und/oder

iv) Verwendung einer Vakuumtasche aus Membranfolie, die bevorzugt auf die gegenüberliegende Anguss-Seite des Formkörpers platziert wird, womit die Luft von der gegenüberliegenden Seite zum Anguss evakuiert wird.

Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Nach der Infusion des Harzsystems findet unter Aufrechterhaltung des Vakuums die Reaktion des Harzsystems statt.

Gegenstand der vorliegenden Erfindung ist außerdem die Verwendung des erfindungsgemäßen Formkörpers oder des erfindungsgemäßen Paneels für Rotorblätter, in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

Nachfolgend wird die vorliegende Erfindung anhand von Beispielen verdeutlicht.

Beispiele

Beispiel 1

a) Herstellung der Schaumstoffe

Es werden verschiedene Extrusionsschäume (Beispiel BS1 und BS3 bis BS6; Referenzbeispiel BS2) eingesetzt.

Zum Vergleich werden Polymerschaumstoffe nach dem Partikelschaumprozess hergestellt (Vergleichsbeispiel VS7 und VS8). In Tabelle 1 ist eine Übersicht über die verwendeten Schaumstoffe und ihre charakteristischen Eigenschaften gegeben. Die einzelnen Schaumstoffe werden wie folgt hergestellt und anschließend für die Verstärkung auf 20 mm besäumt:

BS1, BS2 und BS3:

Die Herstellung der Schaumstoffplatten erfolgt auf einer Tandem-Extrusionsanlage. 100 Anteile Polystyrol (PS 148H, BASF) werden zusammen mit Flammschutzmittel und Additiven (0,2 Anteile Talkum) kontinuierlich einem Aufschmelzextruder zugeführt. Die Flammschutzmittel und Additive liegen als Batches in Polystyrol (PS 148H, BASF) vor. Durch eine in den Aufschmelzextruder (ZSK 120) eingebrachte Injektionsöffnung werden kontinuierlich Treibmittel ($CO_2$, Ethanol, i-Butan) zugeführt. Der Gesamtdurchsatz inkl. der Treibmittel beträgt 750 kg/h. Die treibmittelhaltige Schmelze wird in einem nachfolgenden Kühlextruder (KE 400) abgekühlt und durch eine Schlitzdüse extrudiert. Die aufschäumende Schmelze wird durch eine beheizte Kalibrierung, deren Oberflächen mit Teflon ausgestattet sind, über ein Rollenband mit unterschiedlichen Abzugsgeschwindigkeiten abgezogen und zu Platten geformt. Typische Plattendimensionen vor der mechanischen Bearbeitung liegen bei ca. 700 mm Breite (y-Richtung) und 50 mm Dicke (z-Richtung).

BS4:

Analog zu BS1 erfolgt die Herstellung der Schaumstoffplatte auf einer Tandem-Extrusionsanlage. In den Aufschmelzextruder (ZSK 120) werden kontinuierlich Polyphenylenether-Batch (PPE/PS-Batch Noryl C6850, Sabic) und Polystyrol (PS 148H, BASF) zugeführt, um einen Gesamtblend bestehend aus 25 Anteilen PPE und 75 Anteilen PS herzustellen. Zusätzlich werden Additive wie Talkum (0,2 Anteile) als PS-Batch (PS 148H, BASF) über den Einzug dosiert. Treibmittel ($CO_2$, Ethanol und i-Butan) werden in die Injektionsöffnung unter Druck eingespritzt. Der Gesamtdurchsatz inklusive der Treibmittel und Additive beträgt 750 kg/h. Die treibmittelhaltige Schmelze wird in einem nachfolgenden Kühlextruder (ZE 400) abgekühlt und durch eine Schlitzdüse extrudiert. Die aufschäumende Schmelze wird durch eine beheizte Kalibrierung, deren Oberflächen mit Teflon ausgestattet sind, über ein Rollenband abgezogen und zu Platten geformt. Typische Plattendimensionen vor der mechanischen Bearbeitung liegen bei ca. 800 mm Breite (y-Richtung) und 60 mm Dicke (z-Richtung).

BS5:

Analog zu BS1 wird die identische Tandem-Extrusionsanlage bei gleichen Durchsätzen verwendet. Als Polymer wird ein Blend aus 50 Anteilen Styrol-Maleinsäureanhydrid-Polymer (SMA) (Xiran SZ26080, Polyscope) und 50 Anteilen Styrol-Acrylnitril-Polymer (SAN) (VLL25080, BASF) verwendet. Zudem werden Nukleierungsmittel (0,2 Anteile Talkum) und Stabilisatoren (0,2 Anteile Tinuvin 234) zugegeben. Als Treibmittel werden $CO_2$, Aceton und i-Butan eingesetzt.

BS6:

Polyester-Schäume werden durch eine Multilochdüse auf einer Extrusionsanlage schaumextrudiert. Die thermoplastischen Polymere (getrocknetes PET Granulat) werden in der Aufschmelzzone des Doppelschneckenextruders (Schneckendurchmesser = 132 mm, Verhältnis von Länge zu Durchmesser = 24) aufgeschmolzen und mit Nukleierungsmittel gemischt. Nach dem Aufschmelzen wird Cyclopentan als Treibmittel zugegeben. Der Gesamtdurchsatz beträgt ca. 150 kg/h. Die homogene Schmelze wird direkt nach Zugabe des Treibmittels über die folgenden Gehäuse und den statischem Mischer gekühlt. Vor Erreichen der Mehrlochdüse muss die Schmelze einen Schmelzefilter durchlaufen. Die expandierbare Schmelze wird durch die Mehrlochdüse aufgeschäumt und mittels einer Kalibratoreinheit werden die Einzelstränge zu einem Block zusammengeführt. Die extrudierten Platten werden anschließend auf konstante Außengeometrie spanend konfektioniert und parallel zur Extrusionsrichtung durch thermisches Schweißen gefügt. Die mittlere Dichte des Schaumstoffs beträgt 60 kg/m$^3$.

VS7:

Als Schaumstoff wird ein polyesterbasierter Partikelschaumstoff verwendet. Die Herstellung der expandierbaren Granulate und der Schaumstoffplatten erfolgt analog zu WO 2012/020112, Beispiel 7.

VS8:

Als Schaumstoff wird ein polystyrolbasierter Partikelschaumstoff verwendet, der in einem Partikelschaumautomat als Schaumstoffplatte hergestellt und anschließend zu Platten gesägt wird (Rohstoffbasis: Styropor P326, BASF).

b) Charakterisierung der Schaumstoffe

Die Eigenschaften der Schaumstoffe werden wie folgt bestimmt:

- Glasübergangstemperatur ($T_G$): Die Glasübergangstemperatur wird nach ISO 11357-2 (Stand Juli 2014) bei einer Heizrate von 20 K/min unter Stickstoffatmosphäre aus dem zweiten Heizlauf bestimmt.

- Anisotropie: Für die Bestimmung der Anisotropie werden mikroskopische Aufnahmen der Zellen des Mittelbereichs der Schaumstoffe statistisch ausgewertet. Die größte Dimension der Zellen wird als a-Richtung bezeichnet, die beiden anderen, orthogonal dazu orientierten Dimensionen (b-Richtung und c-Richtung) resultieren daraus. Die Anisotropie ergibt sich als Quotient zwischen der a-Richtung und der c-Richtung.

- Orientierung der a-Richtung der Zelle relativ zur Dickenrichtung (d); Winkel $\gamma$: Die Orientierung der a-Richtung der Zelle wird ebenfalls durch mikroskopische Aufnahmen ausgewertet. Der eingeschlossene Winkel zwischen der a-Richtung und der Dickenrichtung (d) gibt die Orientierung wieder.

- kleinste Dimension der Zelle (c-Richtung): Analog wie die Anisotropie wird durch statistische Analyse der mikroskopischen Aufnahmen die kleinste Dimension der Zellen bestimmt.

- Druckfestigkeit entlang z-Richtung: Die Druckfestigkeit wird in Anlehnung an DIN EN ISO 844 bestimmt (Stand deutsche Version Oktober 2009).

- Verhältnis Druckfestigkeit des Schaumstoffs entlang z-Richtung zur Druckfestigkeit des Schaumstoffs entlang x-Richtung (Druckfestigkeit z/x): Das Verhältnis der Druckfestigkeit entlang der z-Richtung zur Druckfestigkeit der x-Richtung wird durch den Quotienten aus den beiden Einzelwerten bestimmt.

- Geschlossenzelligkeit: Die Geschlossenzelligkeit wird nach DIN EN ISO 4590 bestimmt (Stand deutsche Version August 2003).

- Dichte: Die Dichte der reinen Schaumstoffe wird nach ISO 845 (Stand Oktober 2009) bestimmt.

- Harzaufnahme: Für die Harzaufnahme werden Schaumstoffe nach spanender Entfernung der Oberfläche durch Hobeln verglichen. Neben den eingesetzten Harzsystemen, den Schaumstoffplatten und Glasgelegen werden die folgenden Hilfsmaterialien verwendet: Nylon Vakuumfolie, Vakuumdichtband, Nylon Fließhilfe, Polyolefin Trennfolie, Polyester Abreißgewebe sowie PTFE Membranfolie und Polyester Absaugvlies. Paneele werden aus den Formkörpern durch Aufbringung faserverstärkter Decklagen mittels Vakuuminfusion hergestellt. An der Ober- und Unterseite der Schaumstoffe werden je zwei Lagen Quadrax-Glasgelege (Roving: E-Glass SE1500, OCV; Textil: Saertex, isotropes Laminat [0°/-45°/90°45°] mit je 1200 g/m$^2$) aufgebracht. Für die Bestimmung der Harzaufnahme wird zwischen dem Schaumstoff und dem Glasgelege, im Gegensatz zur standardmäßigen Herstellung der Paneele, eine Trennfolie eingelegt. Damit ist die Harzaufnahme des reinen Schaumstoffs bestimmbar. Auf den Glasgelegen werden beidseitig das Abreißgewebe und die Fließhilfen angebracht. Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Der Aufbau wird auf einem elektrisch beheizbaren Tisch mit einer Glasoberfläche vorbereitet.

Als Harzsystem wird aminisch härtendes Epoxid verwendet (Harz: BASF Baxxores 5400, Härter: BASF Baxxodur 5440, Mischungsverhältnis und weitere Verarbeitung nach Datenblatt). Nach dem Mischen der beiden Komponenten wird das Harz für 10 min bei bis zu 20 mbar evakuiert. Bei einer Harztemperatur von 23 $^+$/- 2 °C erfolgt die Infusion auf den vortemperierten Aufbau (Tischtemperatur: 35 °C). Durch anschließende Temperaturrampe von 0,3 K/min von 35 °C auf 75 °C und isothermer Aushärtung bei 75 °C für 6 h können Paneele hergestellt werden, die aus den Formkörpern und glasfaserverstärkten Decklagen bestehen.

Zu Beginn werden die Schaumstoffe nach ISO 845 (Stand Oktober 2009) vermessen, um die Rohdichte des Schaumstoffes zu erhalten. Nach dem Aushärten des Harzsystems werden die verarbeiteten Paneele besäumt, um überschüssige Harzansammlungen in den Randbereichen durch nicht passend anliegende Vakuumfolie zu eliminieren. Anschließend werden die Decklagen entfernt und die enthaltenen Schaumstoffe erneut durch ISO 845 vermessen. Aus der Differenz der Dichten ergibt sich die absolute Harzaufnahme. Durch Multiplikation mit der Dicke des Schaumstoffes ergibt sich die entsprechende Harzaufnahme in kg/m$^2$.

- Vakuumstabilität: Die Beurteilung der Vakuumstabilität erfolgt qualitativ. Die Schaumstoffe werden auf eine Aluminiumplatte aufgebracht, mit Polyestervlies bedeckt und nach Aufbringung einer Vakuumfolie mit Unterdruck im Bereich von 10 - 20 mbar belastet. Dimensionsänderungen werden qualitativ beobachtet.

- Thermoformbarkeit: Die Thermoformbarkeit wird qualitativ bewertet. Dazu wird ein erwärmter Aluminiumkörper auf den Schaum unter leichtem Anpressdruck aufgebracht und die Verformbarkeit bei gleichzeitiger Vermeidung thermischer Degradation beurteilt.

Tabelle 1: Schaumstoffe und wesentliche Eigenschaften

| Schaumstoff | | BS1 | BS2 | BS3 | BS4 | BS5 | BS6 | VS7 | VS8 |
|---|---|---|---|---|---|---|---|---|---|
| Herstellverfahren | (-) | Extrusion | Extrusion | Extrusion | Extrusion | Extrusion | Extrusion | Partikel | Partikel |
| Polymer | (-) | PS | PS | PS | PPE/PS | SMA/ SAN | Polyester | Polyester | PS |
| Glasübergangstemperatur | (°C) | n.a. | n.a. | n.a. | n.a. | n.a. | n.a. | 118 | n.a. |
| Anisotropie der Zellhauptachsen | (-) | 1,3 | 1,3 | 1,4 | 1,2 | 1,1 | 1,2 | nein | nein |
| $\gamma$ | (°) | 0 | 90 | 0 | 0 | 0 | 0 | - | - |
| c-Richtung | (mm) | 0,09 | 0,09 | 0,14 | 0,07 | 0,08 | 0,25 | n.a. | n.a. |
| Druckfestigkeit entlang z-Richtung | (MPa) | 0,82 | 0,81 | 0,4 | 0,77 | 0,35 | 0,70 | 0,35 | 0,48 |
| Druckfestigkeit z/x | (-) | 3,6 | 3,4 | 1,5 | 3,9 | 4,0 | 4,1 | - | - |
| Geschlossenzelligkeit | (%) | > 95 | > 95 | > 95 | > 95 | > 95 | > 95 | n.a. | n.a. |
| Dicke (z-Richtung) | (mm) | 20 | 20 | 20 | 20 | 20 | 20 | 20 | 20 |
| Harzaufnahme | $(kg/m^2)$ | 0,2 | 0,2 | 0,2 | 0,2 | 0,1 | 1,8 | 2,0 | n.a. |
| Dichte | $(kg/m^3)$ | 47 | 47 | 32 | 48 | 31 | 60 | 51 | 47 |
| Druckfestigkeit zu Dichte | $(kPa/(kg/m^3))$ | 17 | 5 | 12 | 16 | 11 | 12 | 7 | 10 |
| Vakuumstabilität | (-) | sehr gut | gut | gut | sehr gut | sehr gut | sehr gut | sehr gut | sehr gut |
| Thermoformbarkeit | (-) | gut | gut | gut | gut | gut | sehr gut | gut | gut |

Die Extrusionsschaumstoffe zeichnen sich durch eine hohe Anisotropie, hohe Geschlossenzelligkeit und gute Vakuumstabilität aus. Zudem sind alle Extrusionsschaumstoffe durch thermische Prozesse umformbar. Außerdem können hohe Druckfestigkeiten in Dickenrichtung bei geringen Dichten erzielt werden und die Harzaufnahme, besonders bei BS1 bis BS5 sehr gering gehalten werden.

c) Herstellung der Formkörper (Verstärkung der Schaumstoffe)

Alle Schaumstoffe werden mit Glasfasern verstärkt. Die Formkörper werden wie folgt hergestellt, die Eigenschaften der Formkörper sind in Tabelle 2 dargestellt. Je nach Versuch werden Handmuster bis zu größeren Proben hergestellt.

VF1:

Der Schaumstoff BS1 wird mit Glasfasern (Rovings, S2-Glas, 406 tex, AGY) verstärkt. Die Glasfasern werden in Form von Rovings unter einem Winkel $\alpha$ von 0° eingebracht. Die Glasfasern sind in einem regulären rechteckigen Muster mit gleichen Abständen $a_1 = a_2 = 12$ mm eingebracht. An beiden Seiten werden zusätzlich ca. 5,5 mm der Glasfasern an der Decklage an Überstand gelassen, um die Anbindung an die später eingebrachten Glasfasermatten als Decklagen zu verbessern. Die Fasern bzw. Faserrovings werden durch einen kombinierten Näh- / Häkelprozess automatisiert eingebracht. Zunächst wird mit einer Hakennadel (Durchmesser ca. 0,80 mm) vollständig von der ersten Seite zur zweiten Seite des Extrusionsschaumstoffs durchgestochen. Auf der zweiten Seite wird ein Roving in den Haken der Hakennadel eingehängt und anschließend von der zweiten Seite durch die Nadel zurück zur ersten Seite des Extrusionsschaumstoffs gezogen. Schließlich wird der Roving an der zweiten Seite abgeschnitten und an der Nadel die gebildete Rovingschlaufe aufgeschnitten. Die Hakennadel ist somit bereit für den nächsten Vorgang.

BF2:

Der Schaumstoff BS1 wird analog zu VF1 mit Glasfasern (Rovings, S2-Glass, 406 tex, AGY) verstärkt. Die Glasfasern werden in Form von Rovings unter einem Winkel $\alpha$ von 45° in vier unterschiedlichen Raumrichtungen im Winkel $\beta$ von 90° zueinander eingebracht.

VF3:

Der Schaumstoff BS2 wird analog zu VF1 verstärkt, lediglich der Winkel $\varepsilon$ unterscheidet sich.

VF4:

Der Schaumstoff BS3 wird analog zu VF1 verstärkt.

BF5:

Der Schaumstoff BS4 wird analog zu BF2 verstärkt.

BF6:

Der Schaumstoff BS4 wird analog zu BF2 verstärkt. Vor der Verstärkung werden geschlitzte Platten durch spanende Bearbeitung mittels Kreissägen hergestellt. Der Schlitzabstand längs und quer beträgt jeweils 30 mm. Die Schlitze werden nur auf einer Seite der Platte mit einer Schlitzbreite von 2 mm und einer Schlitztiefe von 19 mm eingebracht (Plattendicke von 20 mm).

BF7:

Die Herstellung erfolgt analog zu BF6. Zusätzlich zu der Einbringung der Schlitze wird auf der ungeschlitzten Seite ein textiles Trägertextil (Leinwandgewebe, 50 g/m$^2$, E-Glas mit thermoplastischem Binder) thermisch aufgebracht.

BF8:

Der Schaumstoff BS4 wird analog zu BF5 verstärkt. Im Unterschied dazu werden eine andere Hakennadel (Durchmesser ca. 1,12 mm) und ein stärkerer Roving (Roving, E-Glas, SE1500, 900 tex, 3B) verwendet.

BF9:

Der Schaumstoff BS4 wird mit einer Widerhakennadel verstärkt. Dazu werden Schnittglasfasern aus Rovings (E-Glas) mit einer Länge von 30 mm flächig auf den Schaumstoff aufgebracht und anschließend mit einem Nadelbalken mit mehreren Widerhakennadeln (needle-bonding) in bzw. durch den Schaum gedrückt. Nach dem Zurückziehen der Nadeln bleibt ein großer Teil der Fasern im Schaum zurück, überschüssige Fasern an der Oberfläche werden abgesaugt. Der Schritt wird für alle gewünschten Richtungen wiederholt. Der Anteil der Fasern in den verschiedenen Richtungen ist nahezu identisch.

BF10:

Der Schaumstoff BS5 wird analog zu BF2 verstärkt.

BF11:

Der Schaumstoff BS6 wird analog zu BF2 verstärkt.

VF12:

Der Schaumstoff VS7 wird analog zu BF2 verstärkt.

VF13:

Der Schaumstoff VS8 wird analog zu BF2 verstärkt.

d) Charakterisierung der Formkörper

- Drapierbarkeit: Die Drapierbarkeit der Formkörper wird qualitativ bestimmt. Die Formkörper werden dazu auf eine einfach gekrümmte Form mit einem Biegeradius von 2 m gelegt. Die Anpassung an die Krümmung der Form und die Vermeidung von Ausbrüchen bzw. Defekten am Formkörper werden bewertet.

- Durchnähwiderstand: Für die Beurteilung fertigungstechnischer Vorteile bei der Verstärkung durch Rovings werden vergleichende Einstechversuche durchgeführt. Die Nadel wird an einer dynamischen Prüfmaschine mechanisch befestigt. Anschließend wird an 5 verschiedenen Stellen in den Schaum eingestochen und der Kraft-Weg-Verlauf aufgenommen. Der Halbsinus hat eine Amplitude von 25 mm, sodass die Nadel 25 mm in den Schaum eindringt. Beim Auftreffen der Nadel hat diese eine Geschwindigkeit von 2 m/s. Je nach Probendicke wird die Probe durchstoßen. Die Probenoberfläche bildet den Nullpunkt der Messung. Die Kraftmessung erfolgt durch einen piezoelektrischen Kraftaufnehmer. Die angegebenen Werte sind Mittelwerte aus den 5 Messungen und spiegeln die Kraft bei 10 mm Eindringtiefe in Newton (N) wider.

Tabelle 2: Formkörper und wesentliche Eigenschaften

| Formkörper | (-) | VF1 | BF2 | VF3 | VF4 | BF5 | BF6 | BF7 | BF8 | BF9 | BF10 | BF11 | VF12 | VF13 |
|---|---|---|---|---|---|---|---|---|---|---|---|---|---|---|
| Schaumstoff | (-) | BS1 | BS1 | BS2 | BS3 | BS4 | BS4 | BS4 | BS4 | BS4 | BS5 | BS6 | VS7 | VS8 |
| Fasereinbringver-fahren | (-) | Haken-nadel | Haken-nadel | Haken-nadel | Haken-nadel | Haken-nadel | Haken-nadel | Haken-nadel | Haken-nadel | Widerhak-en | Haken-nadel | Haken-nadel | Haken-nadel | Haken-nadel |
| Fasermaterial | (-) | S-Glas | S-Glas | S-Glas | S-Glas | S-Glas | S-Glas | S-Glas | E-Glas | E-Glas | S-Glas | S-Glas | S-Glas | S-Glas |
| Faserstärke | (tex) | 406 | 406 | 406 | 406 | 406 | 406 | 406 | 900 | 900 | 406 | 406 | 406 | 406 |
| $\alpha$ | (°) | 0 | 45 | 0 | 0 | 45 | 45 | 45 | 45 | 45 | 45 | 45 | 45 | 45 |
| $\beta$ | (°) | -- | 90 | -- | -- | 90 | 90 | 90 | 90 | 90 | 90 | 90 | 90 | 90 |
| $\varepsilon$ | (°) | 0 | 45 | 90 | 0 | 45 | 45 | 45 | 45 | 45 | 45 | 45 | - | - |
| Anzahl Faserorientierungen | (-) | 1 | 4 | 1 | 1 | 4 | 4 | 4 | 4 | 4 | 4 | 4 | 4 | 4 |
| Abstand Fasern $(a_1 \times a2)$ | (mm $\times$ mm) | 12 × 12 | 12 × 12 | 12 × 12 | 12 × 12 | 12 × 12 | 12 × 12 | 12 × 12 | 12 × 12 | 20 × 20 | 12 × 12 | 12 × 12 | 12 × 12 | 12 × 12 |
| Faserbereich (FB2) / Gesamtfaser (F) | (%) | 63 | 71 | 63 | 63 | 71 | 71 | 71 | 71 | 51 - 56 | 71 | 71 | 71 | 71 |
| Anzahl Fasern | (1/m²) | 6944 | 27778 | 6944 | 6944 | 27778 | 27778 | 27778 | 27778 | 10000 | 27778 | 27778 | 27778 | 27778 |
| Durchnähwiderstand | (N) | 7,4 | 7,9 | 9,1 | 6,1 | - | - | - |  | - | - | - | - | - |
| Schlitzeinbringung | (-) | nein | nein | nein | nein | nein | ja | ja | nein | nein | nein | nein | nein | nein |
| Aufbringung weiterer Schichten (S2) | (-) | nein | nein | nein | nein | nein | nein | ja | nein | nein | nein | nein | nein | nein |
| Drapierbarkeit | (-) | nein | nein | nein | nein | nein | gut | sehr gut | nein | nein | nein | nein | nein | nein |

Die Extrusionsschaumstoffe lassen sich einfach und reproduzierbar durch Fasern zu Formkörpern verarbeiten. Vorteilhaft ist eine Einbringung der Fasern unter Winkeln ε von weniger als 60° zur größten Dimension (a-Richtung) der Zellen, da somit der Eindringwiderstand beim Verstärkungsprozess reduziert werden kann (siehe Anstieg des Winkels und des Durchnähwiderstands von VF1 nach VF3). Zudem kann durch Extrusionsschaumstoffe reduzierter Dichte der Eindringwiderstand weiter verringert werden (VF4). Die Drapierbarkeit der Formkörper kann durch Schlitze erreicht werden, die vorteilhaft vor der Einbringung der Fasern in den Formkörper eingebracht werden (BF6 gegenüber BF5). Eine weitere Verbesserung kann durch einen textilen Träger auf der Rückseite erreicht werden, der ein Ausbrechen der geschnittenen Schaumstoffelemente verhindert und den Gesamtzusammenhalt verbessert (BF7). Schließlich können unterschiedliche Fasertypen (BF8), Einbringprozesse (BF9) und Extrusionsschaumstoffe (BF10, BF11) genutzt werden.

e) Herstellung der Paneele

Aus den Formkörpern werden anschließend Paneele durch Aufbringung faserverstärkter Decklagen mittels Vakuuminfusion (VI) hergestellt, wie vorstehend in Abschnitt a) (Bestimmung der Harzaufnahme) beschrieben. Statt des Schaumstoffs wird allerdings der Formkörper eingesetzt, im Gegensatz zur Harzaufnahmebestimmung wird außerdem zwischen den Formkörper und den Glasgelegen keine Trennfolie eingebracht.

f) Charakterisierung der Paneele

- Schubsteifigkeit und -festigkeit: Die Schubeigenschaften werden nach DIN 53294 bei 23°C und 50 % rel. Feuchte bestimmt (Stand Februar 1982).

- Schälfestigkeit: Die Schälfestigkeit der Paneele wird mit Single Cantilever Beam (SCB)-Proben bestimmt. Die Formteilhöhe der Proben beträgt 20 mm, die Deckschichten bestehen aus jeweils ca. 2 mm dicken, quasiisotropen glasfaserverstärkten Epoxidharzschichten. Die Proben werden in einer Zwick Z050 Zugprüfmaschine mit einer Geschwindigkeit von 5 mm/min geprüft, wobei jeder Probekörper mehrfach (3 bis 4 mal) be- und entlastet wird. Das Risswachstum bzw. der Zuwachs bei jedem Belastungszyklus (Δa) wird optisch ermittelt. Aus dem Kraft-Weg-Verlauf wird die Risswachstumsenergie (ΔU) ermittelt. Daraus wird die Risszähigkeit bzw. Schälfestigkeit ermittelt als

$$G_{IC} = \frac{\Delta U}{B\,\Delta a}$$ mit B als Probenbreite.

- Knitterfestigkeit: Der Widerstand gegen Knittern der Decklagen (microwrinkling) wird basierend aus gemessenen Basiseigenschaften des Materials rechnerisch ermittelt. Der Beulwiderstand gegen Knittern der Decklagen lässt sich bestimmen als

$$\sigma_c = 0{,}85 \cdot \sqrt[3]{E_{C3} \cdot E_f \cdot G_C}$$

mit $E_{C3}$: Kernsteifigkeit in Dickenrichtung, $E_f$: Steifigkeit der Deckschicht, $G_C$: Schubsteifigkeit des Kernmaterials

Tabelle 3: Erfindungsgemäße Paneele und wesentliche Eigenschaften

| Paneel | (-) | VP1 | BP2 | VP3 | VP4 | BP5 | BP6 | BP7 | BP8 | BP9 | BP10 | BP11 | VP12 | VP13 |
|---|---|---|---|---|---|---|---|---|---|---|---|---|---|---|
| Formkörper | (-) | VF1 | BF2 | VF3 | VF4 | BF5 | BF6 | BF7 | BF8 | BF9 | BF10 | BF11 | VF12 | FV13 |
| Schichtaufbringung | (-) | VI | VI | VI | VI | VI | VI | VI | VI | VI | VI | VI | VI | VI |
| Schichtaufbau | (-) | Epoxy / E-Glasfaser | Epoxy / E-Glasfaser | Epoxy / E-Glasfaser | Epoxy / E-Glasfaser | Epoxy / E-Glasfaser | Epoxy / E-Glasfaser | Epoxy / E-Glasfaser | Epoxy / E-Glasfaser | Epoxy / E-Glasfaser | Epoxy / E-Glasfaser | Epoxy / E-Glasfaser | Epoxy / E-Glasfaser | Epoxy / E-Glasfaser |
| Schubsteifigkeit | (MPa) | 14* | - | - | - | 147 | - | - | 201 | 115 | 114 | - | 105* | 101* |
| Schubfestigkeit | (MPa) | - | - | - | - | 2,1 | - | - | - | - | - | - | - | - |
| Schälfestigkeit | (kJ/m$^2$) | - | - | - | - | 3,5 | - | - | - | - | - | - | - | - |
| Knitterfestigkeit* | (MPa) | 230 | 230 | 178 | 195 | 233 | 233 | 233 | 233 | 82 | 152 | 238 | 108 | 164 |
| * rechnerisch ermittelte Werte | | | | | | | | | | | | | | |

Alle erfindungsgemäßen Paneele zeichnen sich durch eine hohe Knitterfestigkeit bei geringer Dichte aus (BP2 und BP5 bis BP11) speziell bei Orientierung der Zellhauptachsen parallel zur Plattenorthogonalen (BP2 gegenüber VP3). Dadurch kann bei der Anwendung ein potentielles Versagen vermieden werden. Als besonders vorteilhaft erweist sich zudem die Verwendung von Schäumen, die durch Extrusion durch eine Schlitzdüse hergestellt werden (BP2 und BP5 bis BP10). Die Schälfestigkeit und die Schubsteifigkeit / -festigkeit sind bei geringen Dichten hoch. Im Gegensatz dazu ist die Knitterfestigkeit der Vergleichsschäume gering bzw. die erforderlichen Dichten zur Erreichung höherer Kennwerte hoch.

Beispiel 2 (Auslegung eines Paneels zur Verdeutlichung der erfindungsgemäßen Faserwinkel, theoretische Bestimmung)

Die mechanischen Eigenschaften eines Formkörpers, der den Extrusionsschaumstoff BS4 enthält, wurden theoretisch bestimmt. Als Fasern (F) wurden Glasfasern (Rovings, E-Glass, 900 tex, 3B) eingesetzt. Der Winkel $\alpha$, in dem die Fasern (F) als eingebracht angenommen wurden, lag im Bereich von 0 bis 80°. Bei Winkeln $\alpha > 0°$ wurden die Fasern (F) in vier unterschiedlichen Raumrichtungen im Winkel $\beta$ (0°, 90°, 180°, 270°) zueinander angenommen. Es wurden reguläre rechteckige Muster mit gleichen Abständen a = 16 mm und bei einem Winkel $\alpha$ von 0° 15625 Glasfaserelemente/m$^2$ angenommen.

Die Schubmoduln wurden für unterschiedliche Winkel $\alpha$ rechnerisch ermittelt. Hierzu wurde ein Fachwerkmodell mit nachgiebigen Stäben zur Verbindung der oberen und unteren Deckschichten verwendet. Die Deckschichten wurden als unendlich steif angenommen. Der Extrusionsschaumstoff wies dabei eine Dicke von 25 mm, eine Schubsteifigkeit G=14 MPa, und eine Drucksteifigkeit E=35 MPa auf. Die Harzaufnahme an der Oberfläche des Schaumstoffs wurde mit 0,2 kg/m$^2$ angenommen.

Die Faserbündel bestehen aus E-Glasfaser. Durch den Herstellprozess waren die verstärkenden Faserelemente 2 × 900 tex (= 1800 tex) stark, der Faservolumenehalt wurde mit 40 Vol.-% und der Durchmesser mit 1,5 mm angenommen. Damit ergeben sich die in Tabelle 4 angegebenen Schubmoduln, Dichten des Formkörpers im verarbeiteten Paneel und spezifischen Schubmoduln in Abhängigkeit des Winkels $\alpha$.

Tabelle 4

| Beispiel | Winkel $\alpha$ (°) | Schubmodul (MPa) | Dichte des Formkörpers (kg/m$^3$) | Spezifische Schubmoduln (MPa/ (kg/m$^3$) |
|---|---|---|---|---|
| VF14 | 0 | 15 | 129 | 0,12 |
| BF15 | 10 | 27 | 129 | 0,21 |
| BF16 | 20 | 60 | 132 | 0,45 |
| BF17 | 30 | 104 | 137 | 0,76 |
| BF18 | 40 | 145 | 145 | 1,00 |
| BF19 | 45 | 160 | 151 | 1,06 |
| BF20 | 50 | 169 | 159 | 1,06 |
| BF21 | 60 | 168 | 183 | 0,92 |
| BF22 | 70 | 138 | 234 | 0,59 |
| VF23 | 80 | 83 | 388 | 0,21 |

Es ist deutlich zu erkennen, dass mit steigendem Faserwinkel die Schubsteifigkeit rasch zunimmt, ehe sie ab ca. 60° wieder abfällt.

Für die Anwendung der Paneele ist generell die Biegesteifigkeit bzw. Beulfestigkeit sehr wichtig. Die Beulsteifigkeit eines Paneels mit parallelen, symmetrischen Deckschichten kann bei endseitig eingebrachter Normalkraft wie folgt bestimmt werden:

$$F \geq \frac{\pi^2 D}{\left(l^2 + \frac{\pi^2 D t}{G d^2}\right)} b$$

wobei F die Kraft bis zum Auftreten von globalem Beulen (=Beulfestigkeit) ist, D ist die Biegesteifigkeit des Paneels, G der Schubmodul des Formkörpers (= Kernmaterial), t die Dicke des Formkörpers des Paneels, b die Breite des Paneels und d ist die Dicke des Formkörpers (= Kernmaterial) zzgl. einer Deckschichtdicke.

Die Biegesteifigkeit des Paneels ergibt sich aus:

$$D = \frac{E_D\, t_D^3}{6} + \frac{E_D\, t_D d^2}{2} + \frac{E_K\, t_K^3}{12}$$

$E_D$ ist der E-Modul der Deckschicht, $E_K$ der E-Modul des Formkörpers (= Kernmaterial),
$t_D$ die Dicke der Deckschicht pro Seite, $t_k$ die Dicke des Formkörpers (= Kernmaterial),
d die Dicke des Kernmaterials zzgl. der Dicke einer Deckschicht.

Als Breite des Paneels wurden 0,1 m angenommen, die Länge betrug 0,4 m. Die Dicke des Formkörpers 25 mm, die Dicke der Deckschicht 2 mm, der E-Modul der Deckschicht 39 GPa.

Als Formkörper wurden die Formkörper gemäß Beispiel VF14 bis VF23 eingesetzt.

Tabelle 5 gibt die Ergebnisse an.

Tabelle 5

| Beispiel | Winkel $\alpha$ (°) | Dichte des Formkörpers (kg/m³) | Beulstabilität (kN) | Spezifische Beulstabilität (kN/(kg/m³) |
|---|---|---|---|---|
| VP14 | 0 | 129 | 35 | 0,28 |
| BP15 | 10 | 129 | 55 | 0,43 |
| BP16 | 20 | 132 | 89 | 0,67 |
| BP17 | 30 | 137 | 113 | 0,82 |
| BP18 | 40 | 145 | 126 | 0,87 |
| BP19 | 45 | 151 | 129 | 0,85 |
| BP20 | 50 | 159 | 131 | 0,82 |
| BP21 | 60 | 183 | 130 | 0,71 |
| BP22 | 70 | 234 | 123 | 0,52 |
| VP23 | 80 | 388 | 102 | 0,26 |

Es ist deutlich zu erkennen, dass mit steigendem Winkel $\alpha$ die Beulstabilität rasch zunimmt, ehe sie ab ca. 60° wieder abfällt.

**Patentansprüche**

1. Formkörper aus Extrusionsschaumstoff, **dadurch gekennzeichnet, dass** mindestens eine Faser (F) sich mit einem Faserbereich (FB2) innerhalb des Formkörpers befindet und von dem Extrusionsschaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, und der Extrusionsschaumstoff hergestellt wird durch ein Extrusionsverfahren umfassend die folgenden Schritte:

  I) Bereitstellen einer Polymerschmelze in einem Extruder,
  II) Einbringen von zumindest einem Treibmittel in die in Schritt I) bereitgestellte Polymerschmelze unter Erhalt einer schäumbaren Polymerschmelze,
  III) Extrusion der in Schritt II) erhaltenen schäumbaren Polymerschmelze aus dem Extruder durch zumindest eine Düsenöffnung in einen Bereich niedrigeren Drucks, wobei die schäumbare Polymerschmelze expandiert unter Erhalt eines expandierten Schaums, und
  IV) Kalibrieren des expandierten Schaums aus Schritt III) indem der expandierte Schaum durch ein formgebendes Werkzeug durchgeführt wird, unter Erhalt des Extrusionsschaumstoffs,

  wobei die Faser (F) in einem Winkel $\alpha$ von 10 bis 70° relativ zur Dickenrichtung (d) des Formkörpers in den Extrusionsschaumstoff eingebracht ist und wobei zwei oder mehr Fasern (F) in einem Winkel $\beta$ zueinander in dem

Formkörper vorliegen, wobei der Winkel β im Bereich β = 360°/n, wobei n eine ganzzahlige Zahl ist, liegt, wobei n im Bereich von 2 bis 6 liegt, wobei der Extrusionsschaumstoff Zellen umfasst, wobei mindestens 50 % der Zellen anisotrop sind, wobei mindestens 50 % der Zellen bezogen auf ihre größte Dimension (a-Richtung) in einem Winkel γ von ≤ 45° relativ zur Dickenrichtung (d) des Formkörpers ausgerichtet sind,.

2. Formkörper gemäß Anspruch 1, **dadurch gekennzeichnet, dass**

i) die in Schritt I) bereitgestellte Polymerschmelze mindestens ein Additiv enthält, und/oder

ii) während Schritt II) zu der Polymerschmelze und/oder zwischen Schritt II) und Schritt III) zu der schäumbaren Polymerschmelze mindestens ein Additiv gegeben wird, und/oder

iii) während Schritt III) auf den expandierten Schaum und/oder während Schritt IV) auf den expandierten Schaum mindestens ein Additiv aufgebracht wird, und/oder

iv) während und/oder direkt im Anschluss an Schritt IV) auf den Extrusionsschaumstoff mindestens eine Schicht (S2) aufgebracht wird, und/oder

v) im Anschluss an Schritt IV) der folgende Verfahrensschritt durchgeführt wird:

V) spanende Bearbeitung des in Schritt IV) erhaltenen Extrusionsschaumstoffs.

3. Formkörper gemäß Anspruch 1 oder 2, **dadurch gekennzeichnet, dass** der Extrusionsschaumstoff auf Basis von mindestens einem Polymer ist, das ausgewählt ist aus Polystyrol, Polyester, Polyphenylenoxid, einem aus Phenylenoxid hergestellten Copolymer, einem aus Styrol hergestellten Copolymer, Polyarylethersulfon, Polyphenylensulfid, Polyaryletherketon, Polypropylen, Polyethylen, Polyamid, Polyamidimid, Polyetherimid, Polycarbonat, Polyacrylat, Polymilchsäure, Polyvinylchlorid, oder ein Gemisch davon.

4. Formkörper gemäß einem der Ansprüche 1 bis 3, **dadurch gekennzeichnet, dass** der Extrusionsschaumstoff Zellen umfasst, wobei

i) mindestens 80 % der Zellen anisotrop sind, und/oder

ii) das Verhältnis der größten Dimension (a-Richtung) zur kleinsten Dimension (c-Richtung) von mindestens 50 % der Zellen ≥ 1,05 liegt, und/oder

iii) die mittlere Größe der kleinsten Dimension (c-Richtung) von mindestens 50 % der Zellen im Bereich von 0,01 bis 1 mm liegt, und/oder

iv) mindestens 50 % der Zellen orthotrop oder transversal isotrop sind, und/oder

v) der Extrusionsschaumstoff zu mindestens 80 % geschlossenzellig ist, und/oder

vi) sich die Faser (F) in einem Winkel ε von ≤ 60° relativ zur größten Dimension (a-Richtung) von mindestens 50 % der Zellen des Extrusionsschaumstoffs befindet.

5. Formkörper gemäß einem der Ansprüche 1 bis 4, **dadurch gekennzeichnet, dass**

i) zumindest eines der elastischen Moduli des Extrusionsschaumstoffs sich gemäß einem anisotropen Werkstoff verhalten, und/oder

ii) das Verhältnis der Druckfestigkeit des Extrusionsschaumstoffs in der Dicke (z-Richtung) zu der Druckfestigkeit des Extrusionsschaumstoffs in der Länge (x-Richtung) und/oder das Verhältnis der Druckfestigkeit des Extrusionsschaumstoffs in der Dicke (z-Richtung) zu der Druckfestigkeit des Extrusionsschaumstoffs in der Breite (y-Richtung) ≥ 1,1 ist.

6. Formkörper gemäß einem der Ansprüche 1 bis 5, **dadurch gekennzeichnet, dass**

i) der Extrusionsschaumstoff eine Dicke (z-Richtung) im Bereich von 4 bis 200 mm, eine Länge (x-Richtung) von mindestens 200 mm und eine Breite (y-Richtung) von mindestens 200 mmaufweist, und/oder

ii) die Oberfläche von mindestens einer Seite des Formkörpers mindestens eine Vertiefung aufweist, und/oder

iii) die Oberfläche von mindestens einer Seite des Formkörpers mindestens eine Vertiefung aufweist, wobei die Vertiefung ein Schlitz oder ein Loch ist.

7. Formkörper gemäß Anspruch 1 bis 6, **dadurch gekennzeichnet, dass**

i) die Faser (F) eine einzelne Faser oder ein Faserbündel ist und/oder

ii) die Faser (F) eine organische, anorganische, metallische, keramische Faser oder eine Kombination daraus ist,

iii) die Faser (F) als Faserbündel eingesetzt wird mit einer Anzahl von Einzelfasern pro Bündel von mindestens 10, und/oder

iv) der Faserbereich (FB1) und der Faserbereich (FB3) jeweils unabhängig voneinander 1 bis 45 % und der Faserbereich (FB2) 10 bis 98 % der Gesamtlänge einer Faser (F) ausmachen, und/oder

v) die Faser (F) in einem Winkel $\alpha$ von 30 bis 60° relativ zur Dickenrichtung (d) des Formkörpers in den Extrusionsschaumstoff eingebracht ist, und/oder

vi) im Formkörper die erste Seite des Formkörpers, aus der der Faserbereich (FB1) der Faser (F) herausragt, der zweiten Seite des Formkörpers gegenüberliegt, aus der der Faserbereich (FB3) der Faser (F) herausragt, und/oder

vii) der Formkörper eine Vielzahl von Fasern (F) enthält und/oder mehr als 10 Fasern (F) oder Faserbündel pro m$^2$ umfasst..

8. Paneel umfassend mindestens einen Formkörper gemäß einem der Ansprüche 1 bis 7 und mindestens eine Schicht (S1).

9. Paneel gemäß Anspruch 8, **dadurch gekennzeichnet, dass** die Schicht (S1) mindestens ein Harz umfasst.

10. Paneel gemäß Anspruch 8 oder 9, **dadurch gekennzeichnet, dass** die Schicht (S1) zusätzlich mindestens ein faserförmiges Material enthält, wobei

i) das faserförmige Material Fasern in Form von ein oder mehreren Lagen aus Schnittfasern, Vliesen, Gelegen, Gestricken und/oder Geweben enthält, und/oder

ii) das faserförmige Material organische, anorganische, metallische oder keramische Fasern enthält.

11. Paneel gemäß einem der Ansprüche 8 bis 10, **dadurch gekennzeichnet, dass** das Paneel zwei Schichten (S1) aufweist und die beiden Schichten (S1) jeweils an einer Seite des Formkörpers angebracht sind, die der jeweils anderen Seite im Formkörper gegenüberliegt.

12. Paneel gemäß einem der Ansprüche 8 bis 11, **dadurch gekennzeichnet, dass**

i) der Faserbereich (FB1) der Faser (F) teilweise oder vollständig mit der ersten Schicht (S1) in Kontakt ist, und/oder

ii) der Faserbereich (FB3) der Faser (F) teilweise oder vollständig mit der zweiten Schicht (S1) in Kontakt ist, und/oder

iii) das Paneel zwischen mindestens einer Seite des Formkörpers und mindestens einer Schicht (S1) mindestens eine Schicht (S2) aufweist , und/oder

iv) die mindestens eine Schicht (S1) ein Harz umfasst und der Extrusionsschaumstoff des Formkörpers des Paneels eine oberflächliche Harzaufnahme von $\leq$ 2 000 g/m$^2$ aufweist, bestimmt wie in der Beschreibung angegeben, und / oder

v) die mindestens eine Schicht (S1) ein Harz umfasst und das Paneel eine Schälfestigkeit von $\geq$ 200 J/m$^2$ aufweist, bestimmt wie in der Beschreibung angegeben.

13. Verfahren zur Herstellung eines Formkörpers gemäß einem der Ansprüche 1 bis 7, **dadurch gekennzeichnet, dass** mindestens eine Faser (F) in den Extrusionsschaumstoff teilweise eingebracht wird, wodurch sich die Faser (F) mit dem Faserbereich (FB2) innerhalb des Formkörpers befindet und von dem Extrusionsschaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt.

14. Verfahren gemäß Anspruch 13, **dadurch gekennzeichnet, dass** das teilweise Einbringen von mindestens einer Faser (F) in den Extrusionsschaumstoff durch Einnähen unter Verwendung einer Nadel erfolgt.

15. Verfahren zur Herstellung eines Paneels gemäß einem der Ansprüche 8 bis 12, **dadurch gekennzeichnet, dass** die mindestens eine Schicht (S1) als reaktives, viskoses Harz auf einen Formkörper gemäß einem der Ansprüche 1 bis 7 erzeugt, aufgebracht und ausgehärtet wird.

16. Verwendung eines Formkörpers gemäß einem der Ansprüche 1 bis 7 oder eines Paneels gemäß einem der Ansprüche 8 bis 12 für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

**Claims**

1. A molding made of extruded foam, wherein at least one fiber (F) is present with a fiber region (FB2) within the molding and is surrounded by the extruded foam, while a fiber region (FB1) of the fiber (F) projects from a first side of the molding and a fiber region (FB3) of the fiber (F) projects from a second side of the molding, and the extruded foam is produced by an extrusion process comprising the following steps:

    I) providing a polymer melt in an extruder,
    II) introducing at least one blowing agent into the polymer melt provided in step I) to obtain a foamable polymer melt,
    III) extruding the foamable polymer melt obtained in step II) from the extruder through at least one die aperture into an area at lower pressure, with expansion of the foamable polymer melt to obtain an expanded foam, and
    IV) calibrating the expanded foam from step III) by conducting the expanded foam through a shaping tool to obtain the extruded foam,

    where the fiber (F) has been introduced into the extruded foam at an angle $\alpha$ of 10° to 70° relative to the thickness direction (d) of the molding and where two or more fibers (F) are at an angle $\beta$ to one another in the molding, where the angle $\beta$ is in the range of $\beta = 360°/n$ where n is an integer, where n is in the range from 2 to 6, where the extruded foam comprises cells, where at least 50% of the cells are anisotropic, where at least 50% of the cells, based on their largest dimension (a direction), are aligned at an angle $\gamma$ of $\leq 45°$ relative to the thickness direction (d) of the molding.

2. The molding according to claim 1, wherein

    i) the polymer melt provided in step I) comprises at least one additive, and/or
    ii) at least one additive is added during step II) to the polymer melt and/or between step II) and step III) to the foamable polymer melt, and/or
    iii) at least one additive is applied during step III) to the expanded foam and/or during step IV) to the expanded foam, and/or
    iv) at least one layer (S2) is applied to the extruded foam during and/or directly after step IV), and/or
    v) the following process step is conducted after step IV):
    V) material-removing processing of the extruded foam obtained in step IV).

3. The molding according to claim 1 or 2, wherein the extruded foam is based on at least one polymer selected from polystyrene, polyester, polyphenylene oxide, a copolymer prepared from phenylene oxide, a copolymer prepared from styrene, polyaryl ether sulfone, polyphenylene sulfide, polyaryl ether ketone, polypropylene, polyethylene, polyamide, polyamide imide, polyether imide, polycarbonate, polyacrylate, polylactic acid, polyvinyl chloride, or a mixture thereof.

4. The molding according to any of claims 1 to 3, wherein the extruded foam comprises cells, where

    i) at least 80% of the cells are anisotropic, and/or
    ii) the ratio of the largest dimension (a direction) to the smallest dimension (c direction) of at least 50% of the cells is $\geq 1.05$, and/or
    iii) the mean size of the smallest dimension (c direction) of at least 50% of the cells is in the range from 0.01 to 1 mm, and/or
    iv) at least 50% of the cells are orthotropic or transversely isotropic, and/or
    v) the extruded foam has a closed cell content of at least 80%, and/or
    vi) the fiber (F) is at an angle $\varepsilon$ of $\leq 60°$ relative to the largest dimension (a direction) of at least 50% of the cells of the extruded foam.

5. The molding according to any of claims 1 to 4, wherein

    i) at least one of the elastic moduli of the extruded foam behave (s) in the manner of an anisotropic material, and/or
    ii) the ratio of the compressive strength of the extruded foam in thickness (z direction) to the compressive strength of the extruded foam in length (x direction) and/or the ratio of the compressive strength of the extruded foam in thickness (z direction) to the compressive strength of the extruded foam in width (y direction) is $\geq 1.1$.

**6.** The molding according to any of claims 1 to 5, wherein

i) the extruded foam has a thickness (z direction) in the range from 4 to 200 mm, a length (x direction) of at least 200 mm and a width (y direction) of at least 200 mm, and/or
ii) the surface of at least one side of the molding has at least one recess, and/or
iii) the surface of at least one side of the molding has at least one recess, the recess being a slot or a hole.

**7.** The molding according to claims 1 to 6, wherein

i) the fiber (F) is a single fiber or a fiber bundle, and/or
ii) the fiber (F) is an organic, inorganic, metallic or ceramic fiber or a combination thereof,
iii) the fiber (F) is used in the form of a fiber bundle having a number of single fibers per bundle of at least 10, and/or
iv) the fiber region (FB1) and the fiber region (FB3) each independently account for 1% to 45% and the fiber region (FB2) for 10% to 98% of the total length of a fiber (F), and/or
v) the fiber (F) has been introduced into the extruded foam at an angle $\alpha$ of 30° to 60° relative to the thickness direction (d) of the molding, and/or
vi) in the molding, the first side of the molding from which the fiber region (FB1) of the fiber (F) projects is opposite the second side of the molding from which the fiber region (FB3) of the fiber (F) projects, and/or
vii) the molding comprises a multitude of fibers (F) and/or comprises more than 10 fibers (F) or fiber bundles per $m^2$.

**8.** A panel comprising at least one molding according to any of claims 1 to 7 and at least one layer (S1).

**9.** The panel according to claim 8, wherein the layer (S1) comprises at least one resin.

**10.** The panel according to claim 8 or 9, wherein the layer (S1) additionally comprises at least one fibrous material, where

i) the fibrous material comprises fibers in the form of one or more laminas of chopped fibers, webs, scrims, knits and/or weaves, and/or
ii) the fibrous material comprises organic, inorganic, metallic or ceramic fibers.

**11.** The panel according to any of claims 8 to 10, wherein the panel has two layers (S1) and the two layers (S1) are each mounted on a side of the molding opposite the respective other side in the molding.

**12.** The panel according to any of claims 8 to 11, wherein

i) the fiber region (FB1) of the fiber (F) is in partial or complete contact with the first layer (S1), and/or
ii) the fiber region (FB3) of the fiber (F) is in partial or complete contact with the second layer (S1), and/or
iii) the panel has at least one layer (S2) between at least one side of the molding and at least one layer (S1), and/or
iv) the at least one layer (S1) comprises a resin and the extruded foam of the molding of the panel has a surface resin absorption of $\leq$ 2000 $g/m^2$, determined as stated in the description, and/or
v) the at least one layer (S1) comprises a resin and the panel has a peel resistance of $\geq$ 200 $J/m^2$, determined as stated in the description.

**13.** A process for producing a molding according to any of claims 1 to 7, which comprises partly introducing at least one fiber (F) into the extruded foam, as a result of which the fiber (F) is present with the fiber region (FB2) within the molding and is surrounded by the extruded foam, while the fiber region (FB1) of the fiber (F) projects from a first side of the molding and the fiber region (FB3) of the fiber (F) projects from a second side of the molding.

**14.** The process according to claim 13, wherein at least one fiber (F) is partially introduced into the extruded foam by sewing it in using a needle.

**15.** A process for producing a panel according to any of claims 8 to 12, which comprises producing, applying and curing the at least one layer (S1) in the form of a reactive viscous resin on a molding according to any of claims 1 to 7.

**16.** The use of a molding according to any of claims 1 to 7 or of a panel according to any of claims 8 to 12 for rotor blades in wind turbines, in the transport sector, in the construction sector, in automobile construction, in shipbuilding, in rail vehicle construction, for container construction, for sanitary installations and/or in aerospace.

**Revendications**

1.  Corps moulé à base de mousse d'extrusion, **caractérisé en ce qu'**au moins une fibre (F) se trouve avec une zone (FB2) de fibre à l'intérieur du corps moulé et est entourée de la mousse d'extrusion, tandis qu'une zone (FB1) de fibre de la fibre (F) dépasse d'un premier côté du corps moulé et une zone (FB3) de fibre de la fibre (F) dépasse d'un deuxième côté du corps moulé, et la mousse d'extrusion est produite par un procédé d'extrusion comprenant les étapes suivantes :

    I) disposition d'une masse fondue de polymère dans une extrudeuse,
    II) introduction d'au moins un agent porogène dans la masse fondue de polymère disposée dans l'étape I), avec obtention d'une masse fondue de polymère expansible,
    III) extrusion depuis l'extrudeuse de la masse fondue de polymère expansible obtenue dans l'étape II) à travers au moins un orifice de filière dans une zone de plus basse pression, la masse fondue de polymère expansible subissant une expansion avec obtention d'une mousse expansée, et
    IV) calibrage de la mousse expansée provenant de l'étape III) en faisant passer la mousse expansée dans un outil de formage, avec obtention de la mousse d'extrusion,

    la fibre (F) étant introduite dans la mousse d'extrusion en un angle $\alpha$ de 10 à 70° par rapport à la direction (d) de l'épaisseur du corps moulé et deux ou plus de deux fibres (F) se trouvant dans le corps moulé en un angle $\beta$ l'une/les unes par rapport à l'autre/aux autres, l'angle $\beta$ se situant dans la plage $\beta = 360°/n$, n étant un nombre entier, n se situant dans la plage de 2 à 6, la mousse d'extrusion comprenant des cellules, au moins 50 % des cellules étant anisotropes, au moins 50 % des cellules étant orientées dans leur plus grande dimension (direction a) en un angle $\gamma$ de $\leq 45°$ par rapport à la direction (d) de l'épaisseur du corps moulé.

2.  Corps moulé selon la revendication 1, **caractérisé en ce que**

    i) la masse fondue de polymère fournie dans l'étape I) contient au moins un additif, et/ou
    ii) au moins un additif est ajouté pendant l'étape II) à la masse fondue de polymère et/ou entre l'étape II) et l'étape III) à la masse fondue de polymère expansible, et/ou
    iii) au moins un additif est appliqué pendant l'étape III) sur la mousse expansée et/ou pendant l'étape IV) sur la mousse expansée, et/ou
    iv) au moins une couche (S2) est appliquée au cours de et/ou directement à la suite de l'étape IV) sur la mousse d'extrusion, et/ou
    v) à la suite de l'étape IV) l'étape suivante de processus est effectuée :
    Vi) usinage par enlèvement de matière de la mousse d'extrusion obtenue dans l'étape IV).

3.  Corps moulé selon la revendication 1 ou 2, **caractérisé en ce que** la mousse d'extrusion est à base d'au moins un polymère qui est choisi parmi un polystyrène, polyester, polyoxyphénylène, un copolymère produit à partir d'oxyde de phénylène, un copolymère produit à partir de styrène, une polyaryléthersulfone, un poly(sulfure de phénylène), une polyaryléthercétone, un polypropylène, polyéthylène, polyamide, poly-amidimide, polyétherimide, polycarbonate, polyacrylate, poly(acide lactique), poly(chlorure de vinyle), ou un mélange de ceux-ci.

4.  Corps moulé selon l'une quelconque des revendications 1 à 3, **caractérisé en ce que** la mousse d'extrusion comprend des cellules,

    i) au moins 80 % des cellules étant anisotropes, et/ou
    ii) le rapport de la plus grande dimension (direction a) à la plus petite dimension (direction c) d'au moins 50 % des cellules est $\geq 1,05$, et/ou
    iii) la grandeur moyenne de la plus petite dimension (direction c) d'au moins 50 % des cellules se situe dans la plage de 0,01 à 1 mm, et/ou
    iv) au moins 50 % des cellules sont orthotropes ou transversalement isotropes, et/ou
    v) la mousse d'extrusion est à raison de 80 % à cellules fermées, et/ou
    vi) la fibre (F) se trouve en un angle e de $\leq 60°$ par rapport à la plus grande dimension (direction a) d'au moins 50 % des cellules de la mousse d'extrusion.

5.  Corps moulé selon l'une quelconque des revendications 1 à 4, **caractérisé en ce que**

    i) au moins un des modules d'élasticité de la mousse d'extrusion se comporte conformément à un matériau anisotrope, et/ou

ii) le rapport de la résistance à la compression de la mousse d'extrusion dans l'épaisseur (direction z) à la résistance à la compression de la mousse d'extrusion dans la longueur (direction x) et/ou le rapport de la résistance à la compression de la mousse d'extrusion dans l'épaisseur (direction z) à la résistance à la compression de la mousse d'extrusion dans la largeur (direction y) est ≥ 1,1.

6. Corps moulé selon l'une quelconque des revendications 1 à 5, **caractérisé en ce que**

i) la mousse d'extrusion présente une épaisseur (direction z) dans la plage de 4 à 200 mm, une longueur (direction x) d'au moins 200 mm et une largeur (direction y) d'au moins 200 mm, et/ou
ii) la surface d'au moins un côté du corps moulé comporte au moins un creux, et/ou
iii) la surface d'au moins un côté du corps moulé comporte au moins un creux, le creux étant une fente ou un trou.

7. Corps moulé selon l'une quelconque des revendications 1 à 6, **caractérisé en ce que**

i) la fibre (F) est une fibre individuelle ou un faisceau de fibres et/ou
ii) la fibre (F) est une fibre organique, inorganique, métallique, céramique ou une association de telles fibres.
iii) la fibre (F) est utilisée sous forme de faisceau de fibres avec un nombre de fibres individuelles par faisceau d'au moins 10, et/ou
iv) la zone (FB1) de fibre et la zone (FB3) de fibre constituent chacune indépendamment l'une de l'autre 1 à 45 % et la zone (FB2) de fibre 10 à 98 % de la longueur totale d'une fibre (F), et/ou
v) la fibre (F) est introduite dans la mousse d'extrusion en un angle $\alpha$ de 30 à 60° par rapport à la direction (d) de l'épaisseur du corps moulé, et/ou
vi) dans le corps moulé le premier côté du corps moulé, duquel dépasse la zone (FB1) de fibre de la fibre (F), est opposé au deuxième côté du corps moulé, duquel dépasse la zone (FB3) de fibre de la fibre (F), et/ou vii)le corps moulé contient une pluralité de fibres (F) et/ou comprend plus de 10 fibres (F) ou faisceaux de fibres par m$^2$.

8. Panneau comprenant au moins un corps moulé selon l'une quelconque des revendications 1 à 7 et au moins une couche (S1).

9. Panneau selon la revendication 8, **caractérisé en ce que** la couche (S1) comprend au moins une résine.

10. Panneau selon la revendication 8 ou 9, **caractérisé en ce que** la couche (S1) contient en plus au moins une matière fibreuse,

i) la matière fibreuse contenant des fibres sous forme d'une ou de plusieurs couches de fibres coupées, non-tissés, nattes, tricots et/ou tissus, et/ou
ii) la matière fibreuse contient des fibres organiques, inorganiques, métalliques ou céramiques.

11. Panneau selon l'une quelconque des revendications 8 à 10, **caractérisé en ce que** le panneau comporte deux couches (S1) et les deux couches (S1) sont placées chacune sur un côté du corps moulé qui est opposé à l'autre côté respectif dans le corps moulé.

12. Panneau selon l'une quelconque des revendications 8 à 11, **caractérisé en ce que**

i) la zone (FB1) de fibre de la fibre (F) est partiellement ou totalement en contact avec la première couche (S1), et/ou
ii) la zone (FB3) de fibre de la fibre (F) est partiellement ou totalement en contact avec la deuxième couche (S1), et/ou
iii) le panneau comporte au moins une couche (S2) entre au moins un côté du corps moulé et au moins une couche (S1), et/ou
(iv) ladite au moins une couche (S1) comprend une résine et la mousse d'extrusion du corps moulé du panneau présente une absorption superficielle de résine de ≤ 2 000 g/m$^2$, déterminée comme indiqué dans la description, et/ou
v) ladite au moins une couche (S1) comprend une résine et le panneau présente une résistance au pelage de ≥ 200 J/m$^2$, déterminée comme indiqué dans la description.

13. Procédé pour la production d'un corps moulé selon l'une quelconque des revendications 1 à 7, **caractérisé en ce**

qu'au moins une fibre (F) est introduite en partie dans la mousse d'extrusion, de sorte que la fibre (F) se trouve avec la zone (FB2) de fibre à l'intérieur du corps moulé et est entourée de la mousse d'extrusion, tandis que la zone (FB1) de fibre de la fibre (F) dépasse d'un premier côté du corps moulé et la zone (FB3) de fibre de la fibre (F) dépasse d'un deuxième côté du corps moulé.

14. Procédé selon la revendication 13, **caractérisé en ce que** l'introduction partielle d'au moins une fibre (F) dans la mousse d'extrusion s'effectue par couture avec utilisation d'une aiguille.

15. Procédé pour la fabrication d'un panneau selon l'une quelconque des revendications 8 à 12, **caractérisé en ce que** ladite au moins une couche (S1) est produite, appliquée et durcie en tant que résine réactive visqueuse sur un corps moulé selon l'une quelconque des revendications 1 à 7.

16. Utilisation d'un corps moulé selon l'une quelconque des revendications 1 à 7 ou d'un panneau selon l'une quelconque des revendications 8 à 12 pour des pales de rotor dans des installations d'énergie éolienne, dans le secteur des transports, dans le secteur du bâtiment, dans la construction automobile, dans la construction navale, dans la construction de véhicules sur rail, pour la construction de containers, pour des installations sanitaires et/ou dans l'industrie aérospatiale.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006125561 A
- WO 2011012587 A
- WO 2012138445 A
- GB 2455044 A
- WO 2009047483 A
- US 7201625 B
- US 6767623 B
- EP 2420531 A
- EP 2480531 A
- WO 2005056653 A
- US 3030256 A
- US 2010196652 A
- US 6291049 B
- WO 12134878 A2, Younes
- WO 2012020112 A

**In der Beschreibung aufgeführte Nicht-Patentliteratur**

- **PENCZEK et al.** *Advances in Polymer Science,* 2005, vol. 184, 1-95
- **PHAM et al.** *Ullmann's Encyclopedia of Industrial Chemistry,* 2012, vol. 13
- Polyamide. **FAHNLER.** Kunststoff Handbuch. 1998, vol. 3-4
- Wiley Encyclopedia of Composites. Wiley, 2012
- **PARNAS et al.** Liquid Composite Moulding. Hanser, 2000
- **WILLIAMS et al.** *Composites Part A,* 1997, vol. 27, 517-524